# FASCICULE DE BREVET EUROPEEN

(11) **EP 2 276 798 B1**
(45) Date de publication et mention de la délivrance du brevet: **01.02.2017**
(21) Numéro de dépôt: 09745962.2
(22) Date de dépôt: 17.04.2009
(51) Int. Cl.: C08J 3/24

(54) **PROCEDE DE RETICULATION PAR REACTION DE HUISGEN THERMIQUE, POLYMERES CHROMOPHORES RETICULABLES ET MATERIAUX POLYMERES RETICULES A PROPRIETES ELECTRO-OPTIQUES STABLES**
VERNETZUNGSVERFAHREN MITTELS THERMISCHER HUISGEN-REAKTION, VERNETZBARE CHROMOPHORE POLYMERE UND VERNETZTE POLYMERSTOFFE MIT STABILEN ELEKTROOPTISCHEN EIGENSCHAFTEN
METHOD FOR CROSSLINKING BY THERMAL HUISGEN REACTION, CROSSLINKABLE CHROMOPHORIC POLYMERS, AND CROSSLINKED POLYMER SUBSTANCES HAVING STABLE ELECTRO-OPTICAL PROPERTIES

(30) Priorité: 18.04.2008 FR 0852630
(43) Date de publication de la demande: 26.01.2011
(73) Titulaire: Centre National de la Recherche Scientifique (C.N.R.S.), 75794 Paris Cedex 16 (FR)
(72) Inventeur: ODOBEL, Fabrice, F-44322 NANTES Cédex 3 (FR); SCARPACI, Annabelle, Jenny, F-44322 NANTES Cédex 3 (FR); BLART, Errol, F-44322 NANTES Cédex 3 (FR); FONTAINE, Laurent, F-72085 LE MANS Cédex 09 (FR)
(74) Mandataire: Cabinet Plasseraud
(86) Numéro de dépôt international: PCT/FR2009/050720
(87) Numéro de publication internationale: WO 2009/138643

(56) Documents cités:
- WO-A-2006/012569
- WO-A-2007/012001

## Description

La présente invention porte sur un nouveau procédé de réticulation de polymères chromophores, par réaction d'Huisgen thermique, sur les polymères chromophores réticulables et sur des matériaux polymères réticulés à propriétés optiques non-linéaires présentant une stabilité d'alignement des chromophores importante. De tels matériaux peuvent constituer le matériau actif de modulateurs électrooptiques.

Les modulateurs électrooptiques sont des dispositifs largement utilisés dans les systèmes de communication haut débit et pour le traitement de l'information. Actuellement, le matériau actif dans les modulateurs électrooptiques commerciaux est généralement le niobate de lithium (LiNbO₃), mais ses propriétés le rendent inadapté pour un débit supérieur à 100MHz.¹ D'autre part, sa tension de commande est comprise entre 3 et 6V et augmente avec la modulation de fréquence du signal électrique. C'est pourquoi, on a essayé de le remplacer par un polymère organique à propriété électrooptique qui présente de nombreux avantages, dont notamment une plus grande facilité de mise en forme, une augmentation de la bande passante, une diminution de la tension de commande et du coût de fabrication. A ce jour, les meilleurs matériaux organiques possèdent des coefficients électrooptiques de l'ordre de 300 pm/V, ce qui a permis de fabriquer des modulateurs Mach-Zehnder avec une tension de demi-onde (Vn) inférieure à 1V.²⁻⁵ Ces résultats récents, issus des recherches de l'équipe de Dalton, démontrent l'intérêt majeur des matériaux polymères dans ce domaine.³⁻⁶ Après plusieurs années de recherches par de nombreuses équipes à travers le monde, il est maintenant bien admis que l'une des principales limitations des polymères électrooptiques est liée à l'instabilité dans le temps de l'orientation des molécules actives généralement désignées sous l'appellation de chromophores.^{6,7} En effet, le maintien de l'ordre moléculaire non-centrosymétique doit être amélioré pour faciliter le développement industriel de ce type de matériaux. Les polymères dopés, qui consistent en un mélange de chromophores dilués dans une matrice polymère, présentent une très faible stabilité d'orientation, puisque leur relaxation est atteinte après une centaine d'heures à des températures très inférieures à 80°C.^{6,7} Une plus grande stabilité est obtenue lorsque les chromophores sont greffés à la matrice polymère, mais elle reste cependant insuffisante pour les applications commerciales.^{6,7} Les deux stratégies les plus performantes pour contrecarrer la relaxation des chromophores sont, d'une part l'utilisation de matrices polymères à haute température de transition vitreuse (Tg) et d'autre part le recours à des polymères réticulables. Cette dernière approche consiste à introduire des fonctions réactives, portées soit sur le polymère, soit sur le chromophore,ou encore sur un composé annexe (dopant) qui vont réagir ensemble après l'étape d'orientation (*poling*) par voie thermique (chauffage au-delà de la Tg) ou par voie photochimique (insolation avec de la lumière généralement du spectre UV). Ce procédé de réticulation permet effectivement de figer durablement l'orientation des chromophores après leur orientation, cependant il existe très peu de systèmes chimiques adaptés à cette approche. La difficulté provient du fait que les fonctions de réticulation doivent remplir deux propriétés difficiles à concilier. La première est de rester inerte pendant l'étape de polymérisation et de stockage (pour éviter la réticulation prématurée du polymère), la deuxième est d'offrir une réactivité importante aux-environs de la Tg (pour avoir un rendement de réticulation élevé). Il existe actuellement quatre principaux types de systèmes pour la réticulation de polymères à propriétés électrooptiques, il s'agit du couple maléimide/anthracène^{3,8}, qui réagissent pour former un adduit par réaction de Diels-Alder, la réaction d'homocondensation d'une entité trifluoroéthylène⁹ ou benzocyclobutanone^{10,11} et finalement le système développé par Bosc et *coll*.¹² qui consiste en l'ouverture d'une fonction époxyde par un groupe acide carboxylique. Bien qu'efficace pour stabiliser l'alignement des chromophores^{11,13}, chacune de ces approches présentent ses propres limitations. Par exemple, le polymère (PIII) de Bosc et *coll.* possède une faible stabilité à la température ambiante, ce qui limite son stockage. De plus, il est difficile de fabriquer des films épais (>1 µm) et le film réticulé pourrait présenter une absorbance significative à 1,5 µm en raison des fonctions alcool qui se sont formées. Les systèmes basés sur la réaction de Diels-Alder réagissent souvent avec les doubles liaisons du chromophore; ce qui engendre la dégradation de ces derniers.⁴ Finalement, la décomposition thermique de la benzocyclobutanone en cétène intervient à une température très élevée (200°C) ; ce qui est incompatible avec de nombreux chromophores instables à cette température. Dans chacune de ces approches, la filmabilité des polymères n'est souvent pas discutée, bien que cette caractéristique soit pourtant essentielle pour l'application visée.

Les présents inventeurs ont trouvé qu'il était possible de remédier à ces difficultés en mettant en oeuvre un nouveau mode de réticulation qui consiste en l'utilisation de la réaction de Huisgen thermique.

Bien que cette réaction de Huisgen ait été largement utilisée dans différents domaines de la chimie¹⁶⁻²⁰ suite à la découverte simultanée par Sharpless et *coll*.¹⁴ et Meldal et *coll*.¹⁵ que les sels de cuivre(I) catalysaient cette réaction, la réaction non catalysée où les réactifs réagissent par activation thermique fait l'objet de beaucoup moins d'attention. En 1981, un laboratoire de Eastman Kodak rapporte la fonctionnalisation de polymères possédant des fonctions azoture comme groupes latéraux selon la réaction de cycloaddition-1,3 de Huisgen par chauffage avec différents alcynes.²¹ A la connaissance des déposants, la réaction de Huisgen par activation thermique n'a cependant jamais été utilisée pour induire la réticulation d'un polymère et particulièrement dans le domaine des matériaux à propriétés optiques non-linéaires.

La présente invention a donc pour objet un procédé de réticulation de polymères présentant des groupes chromophores, par réaction de Huisgen thermique.

Cette nouvelle méthode de réticulation s'avère très performante, du fait de sa simplicité mais aussi du fait des excellentes propriétés du polymère réticulé obtenu, notamment la stabilité de l'alignement des chromophores et sa filmabilité.

Ce nouveau procédé repose sur l'utilisation des fonctions azoture et alcyne (encore appelées éthynyle) qui peuvent réagir ensemble, à une température située au dessus de la température ambiante selon la nature des groupes environnants, pour former un triazole selon le principe suivant : 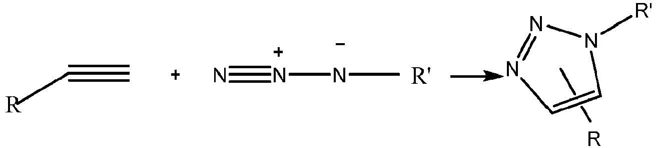 Ainsi, conformément au procédé de l'invention, au moins une fonction azide et au moins une fonction alcyne sont présentes sur l'un au moins du polymère ou de ses précurseurs.
Selon un mode de réalisation avantageux, dans le procédé conforme à l'invention, la fonction azide et/ou la fonction alcyne est (sont) présente(s) sur les groupes chromophores et/ou sur la chaîne polymère ou bien un agent dopant annexe.

Dans la présente demande de brevet, on entend par « groupe chromophore », une molécule présentant au moins une valence libre, à hyperpolarisabilité quadratique non nulle, pouvant être un composé de type « push-pull » et qui présente plus particulièrement une structure D-π-A, dans laquelle D est un donneur d'électrons, A est un accepteur d'électrons et π est un pont π qui conjugue le donneur à l'accepteur. Un "donneur" (représenté par "D") est un atome ou groupe d'atome présentant une faible affinité électronique vis-à-vis de l'accepteur, de telle sorte que lorsque le donneur est conjugué à l'accepteur par un pont π, la densité électronique est transférée du donneur à l'accepteur.

Un "accepteur" (représenté par "A") est un atome ou groupe d'atomes présentant une affinité électronique élevée vis-à-vis du donneur, de telle sorte que lorsque l'accepteur est conjugué au donneur par un pont n, la densité électronique est transférée de l'accepteur au donneur.

Un "pont π" est composé d'un atome ou groupe d'atomes à travers lequel des électrons peuvent être délocalisés d'un donneur vers un accepteur par les orbitales des atomes du pont. De préférence les orbitales sont les orbitales p d'atomes de carbone à liaison multiple telles que par exemple celles des alcènes, alcynes, noyaux aromatiques neutres ou chargés, systèmes cycliques comprenant des hétéroatomes.

A titre d'exemples de groupes chromophores, on peut citer le Disperse Red One (DR1), CLD, FTC, RHSC, PCTCN, TMC ou TM.

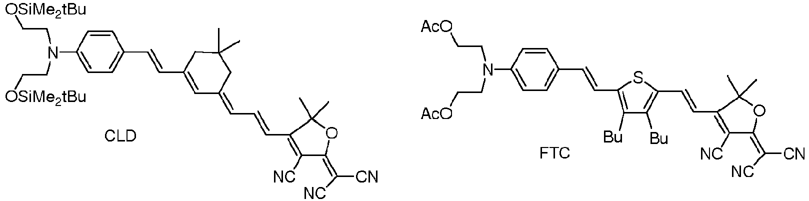

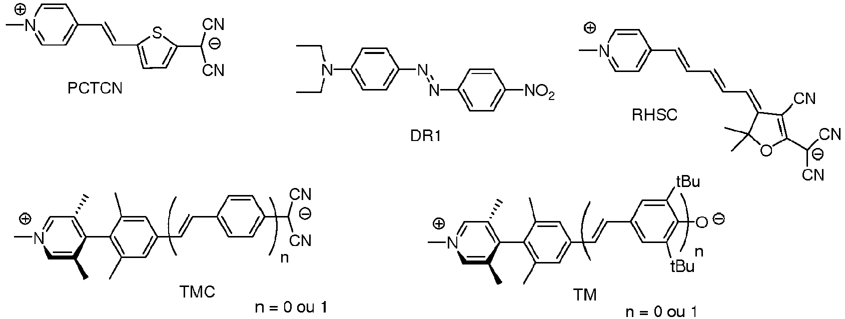

Par « polymères » on entend toute molécule formée de monomères liés entre eux de façon covalente. Les monomères, éventuellement substitués sont appelés « précurseurs » desdits polymères. Dans la présente demande de brevet ce terme « polymères » désigne indifféremment les homopolymères, copolymères et dendrimères. A titre d'exemples de monomères constitutifs, on peut citer les monomères vinyliques, acryliques ou méthacryliques. Bien entendu les polymères peuvent être substitués. S'ils sont substitués par un groupe chromophore, ces polymères sont appelés polymères chromophores. Les monomères et monomère substitués sont les précurseurs des polymères. Les monomères substitués par un groupe chromophore sont appelés « groupes chromophores » ou « chromophores».

Selon un mode de réalisation avantageux, dans le procédé de l'invention, le polymère présente une chaîne principale à base de monomères choisis dans le groupe comprenant les monomères acryliques, méthacryliques, vinyliques et leurs mélanges.

Le groupe chromophore peut-être porteur de la fonction azide ou de la fonction alcyne. Cependant, selon un autre mode de réalisation, l'une au moins de ces fonctions peut être portée par le polymère ou l'un de ses précurseurs.

Ainsi, le procédé conforme à l'invention peut mettre en oeuvre les différents schémas réactionnels suivants: 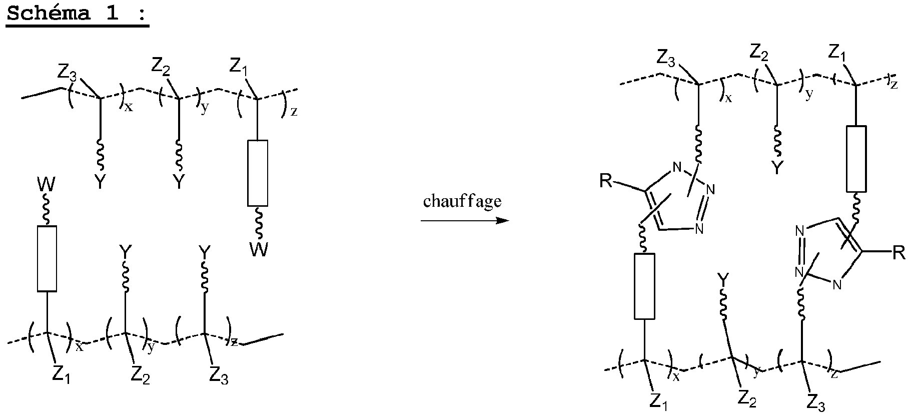 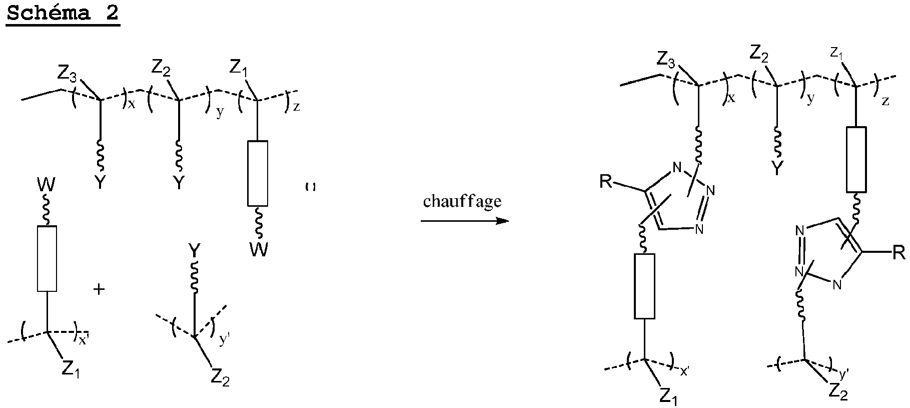 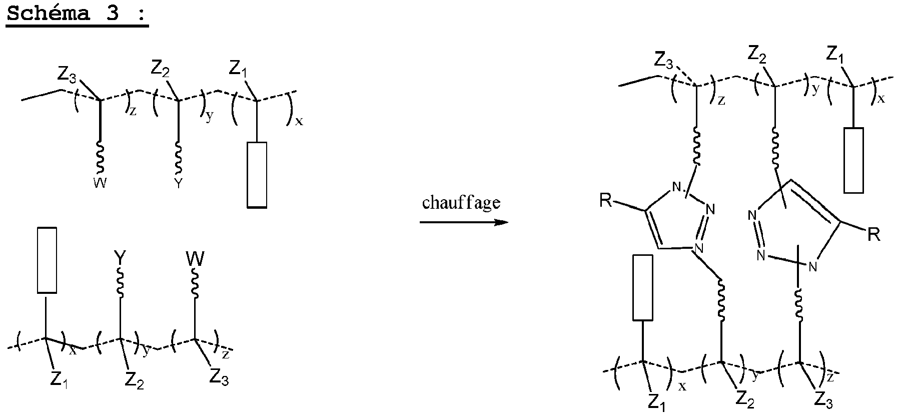 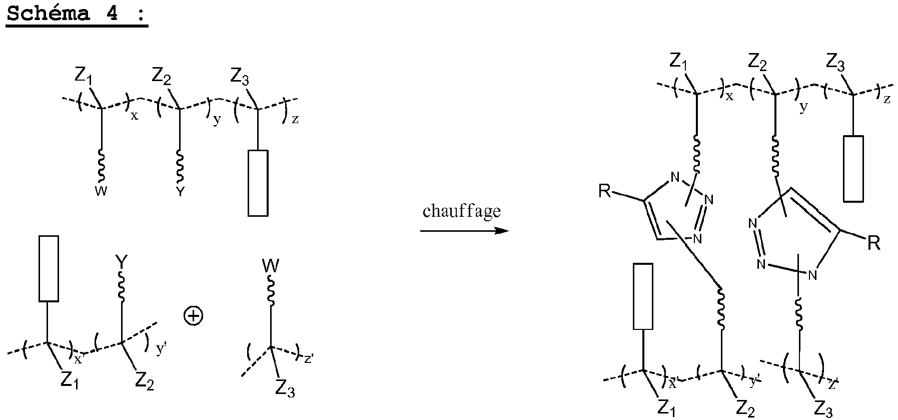 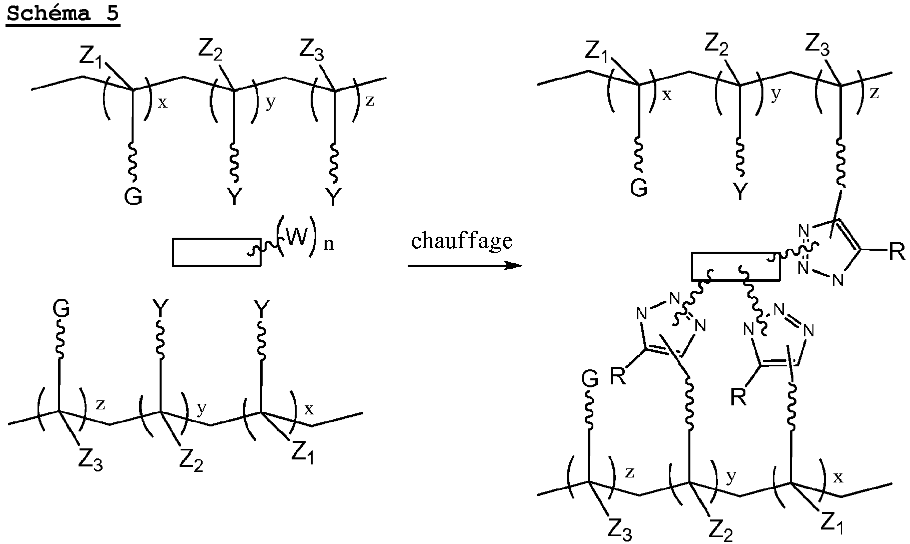 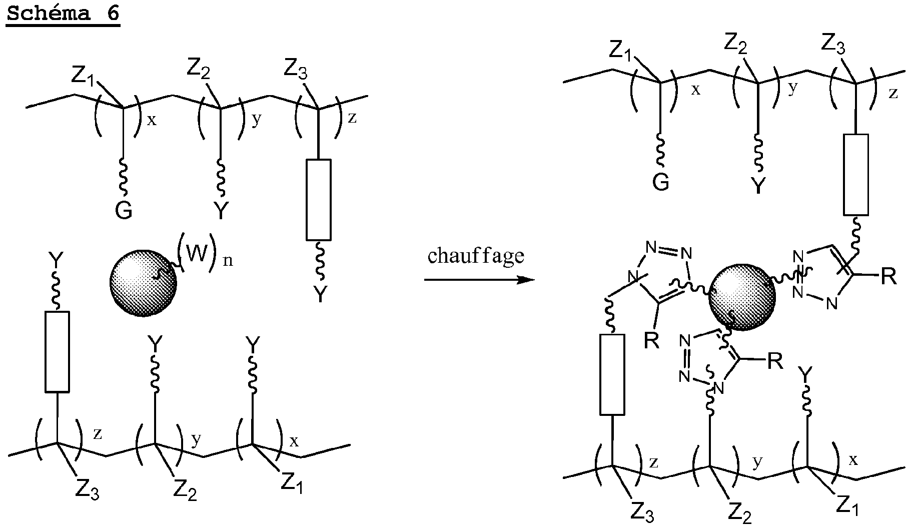 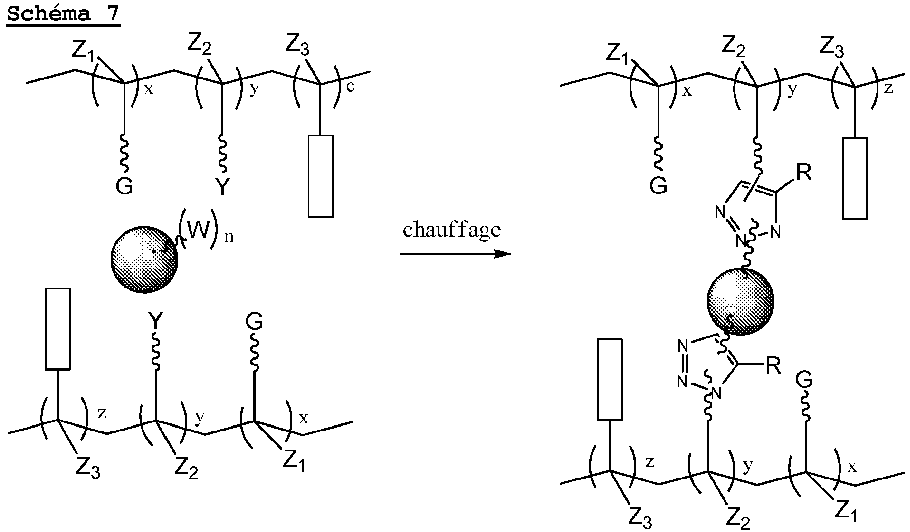 dans lesquels : 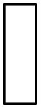 représente un chromophore ayant une hyperpolarisabilité quadratique non nulle ;
- Z₁, Z₂ et Z₃ représentent chacun indépendamment l'un de l'autre H, alkyle en C₁-C₄ ou phényle ;
- G est un groupe neutre vis-à-vis de la réticulation ; 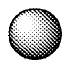 est une entité chimique quelconque;
- n est un entier supérieur 1 ;
- 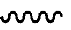 représente un connecteur;
- 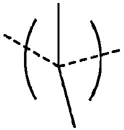 représente le motif répétitif du polymère ;
- x, y, z, x', y' et z' représentent chacun, indépendamment l'un de l'autre un nombre entier compris entre 0 et 100, de préférence entre 2 et 50 et plus préférentiellement encore entre 3 et 10, étant entendu que dans chacun des schémas réactionnels 2 parmi x, y , z et 2 parmi x', y' et z' soit non nuls,
- W et Y sont tels que lorsque Y représente N₃ alors W représente 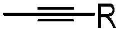 et lorsque W représente N₃ alors Y représente 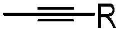 , R étant choisi dans le groupe comprenant H, une chaîne hydrocarbonée linéaire, ramifiée ou cyclique, saturée ou insaturée, renfermant ou non des unités aromatiques comportant éventuellement des hétéroatomes tels que O, S, N, et éventuellement substitué par des groupes électro-donneurs tels que - OCH₃, -N(alkyl)₂ ou par des groupes électro-accepteurs tels que -CN, -CO₂Alkyle, -NO₂, R peut également représenter un groupe protecteur de fonction éthylynique. Comme groupe protecteur de la fonction éthylynique, on peut citer un alkylsilyle, un arylsilyle, ou alkylarylsilyle, de préférence le triméthylsilyle le triisopropylsilyle, le diméthyltertbutylsilyle, le diphényltertbutylsilyle et le terphénylsilyle.
Dans la présente demande, on entend par alkyle, tout chaine carbonyle, linéaire, ramifiée ou cyclique ayant de 1 à 20 atomes de carbone, de préférence de 1 à 8 atomes de carbone, et plus préférentiellement encore 1 à 4 atomes de carbone, tels que éthyle, méthyle, i-propyle, n-propyle, i-butyle, tert-butyle ou n-butyle. L'alkyle peut être substitué.
Comme groupe neutre G, on peut utiliser tout atome ou groupe chimique n'intervenant pas dans la réticulation, par exemple l'hydrogène ou des groupes alkyles insaturés, en particulier le méthyle. 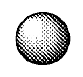 peut représenter toute entité chimique quelconque pouvant être fonctionnalisée par n fonctions W. A titre d'exemple de telle entité, on peut citer un phényle, un triméthyl phényle, un tétraphénylméthyle. Ainsi, 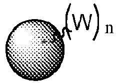 que l'on appellera également agent dopant, peut par exemple représenter 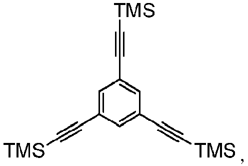 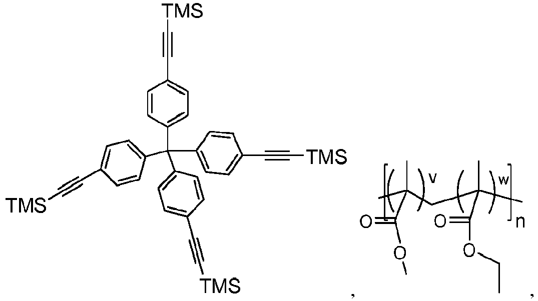 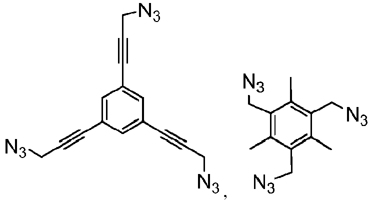 v et w étant des entiers supérieurs ou égaux à 1.

La fonction azide, tout comme la fonction alcyne, peuvent être introduites sur le chromophore, sur le polymère ou sur un précurseur du polymère par réaction de couplage. Par exemple, la fonction azide peut être introduite par couplage d'une fonction acide du chromophore, du polymère ou de l'un de ses précurseurs avec une azidoaniline. La fonction éthylynique peut être introduite par couplage d'une fonction acide du chromophore, du polymère ou de l'un de ses précurseurs avec l'alcool triméthylsilylpropargyle.

Le connecteur est un groupe bivalent présentant une structure variable en fonction des groupes qu'il relie. De préférence le connecteur présente une structure rigide. En particulier, le connecteur peut être choisi dans le groupe comprenant une chaine aliphatique linéaire ou cyclique, pouvant contenir des hétéroatomes, une chaine aromatique pouvant contenir des hétéroatomes. A titre d'exemples on peut citer des chaines alkyles en C1-C4, de préférence en C2-C4 saturées, un noyau benzénique, l'adamantyle, le thiophène, la pyridine, le pyrole, le norbornyle, un résidu de sucre, etc.

Selon un mode de réalisation avantageux, on peut d'une part fixer le groupe chromophore sur un monomère en utilisant des méthodes de couplages classiques, et d'autre part fixer la fonction azide ou la fonction éthylynique sur un autre monomère, par exemple par l'intermédiaire d'un connecteur. On polymérise ensuite les différents monomères. Quand le polymère est formé, on le soumet à la réaction de Huisgen thermique.

Selon un autre mode de réalisation avantageux, on peut d'une part fixer le groupe chromophore sur un monomère en utilisant des méthodes de couplages classiques puis coupler la fonction azide (ou la fonction éthylynique) avec le groupe chromophore, et d'autre part fixer la fonction éthylynique (ou la fonction azide) sur un autre monomère, par exemple par l'intermédiaire d'un connecteur. On copolymérise ensuite les deux types de monomères. Quand le polymère est formé, on le soumet à la réaction de Huisgen thermique.

Les monomères sont polymérisés selon la méthode classique²⁴ (décomposition thermique d'azobisisobutyronitrile -AIBN- dans un solvant organique) ou par polymérisation vivante selon la technique de polymérisation par Addition Réversible - Transfert par Fragmentation de chaîne^{22,25} (anglais, RAFT : Reversible Addition-Fragmentation Chain Transfer) ou par Polymérisation Radicalaire par Transfert d'Atome^{23,26} (en anglais, ATRP : Atom Transfer Radical Polymerization).

Dans le procédé conforme à l'invention, la réticulation par réaction de Huisgen est conduite à une température qui est de l'ordre de la température de transition vitreuse du polymère. Cette température est généralement de 120° à 200°C, de préférence de 130° à 170°C, et plus préférentiellement encore d'environ 150°C. Cette réticulation est conduite en l'absence de catalyseur. Le polymère à réticuler est maintenu à la température de réticulation tout le temps nécessaire à une réticulation complète. La détermination de la fin de la réticulation est à la portée de l'homme du métier et peut être faite par toute méthode d'analyse. En particulier, on peut citer le suivi par IR de la présence d'une vibration autour de 2100 cm⁻¹, vibration spécifique des azides.

De façon générale, on peut indiquer que la durée de la réticulation est de 30mn à 2 h, de préférence de 45mn à 1h30, et plus préférentiellement encore d'environ 1h.

L'invention porte également sur des polymères chromophores thermo-réticulables, de formule générale (I) à (IV): 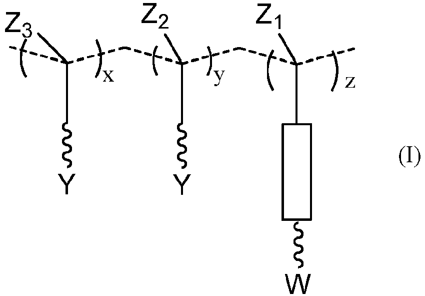 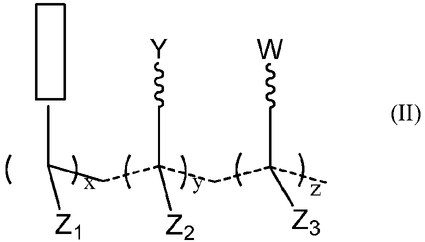 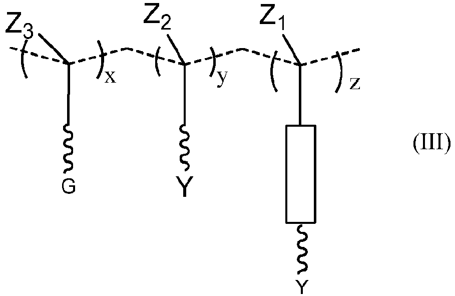 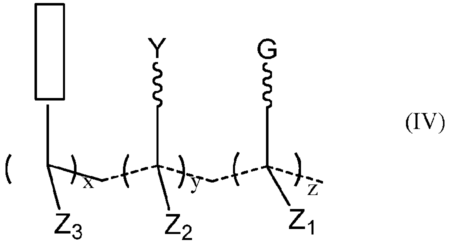 les différents éléments ayant les mêmes significations que celles données en lien avec les schémas réactionnels.

En modifiant la structure des monomères, il est possible d'ajuster finement les propriétés fonctionnelles du polymère telles que son indice de réfraction. Selon un mode de réalisation avantageux, le polymère de formule (I) est choisi dans le groupe comprenant :

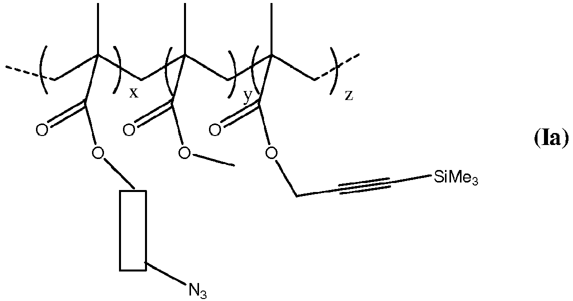

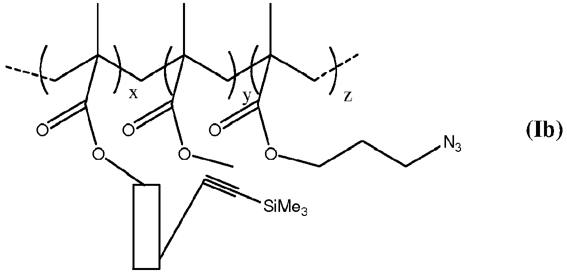

Les différents radicaux ont les mêmes significations que précédemment.

Des exemples de tels polymères selon l'invention dont le monomère est de type méthacrylique et le chromophore est un dérivé du Disperse Red One (DR1), ont la formule (I'a) et (I'b) ci-dessous. 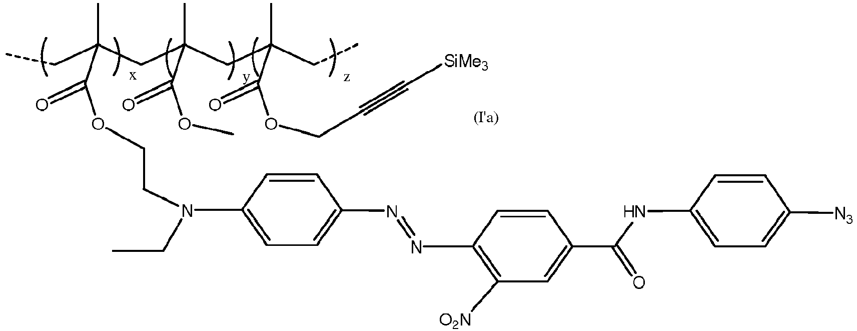 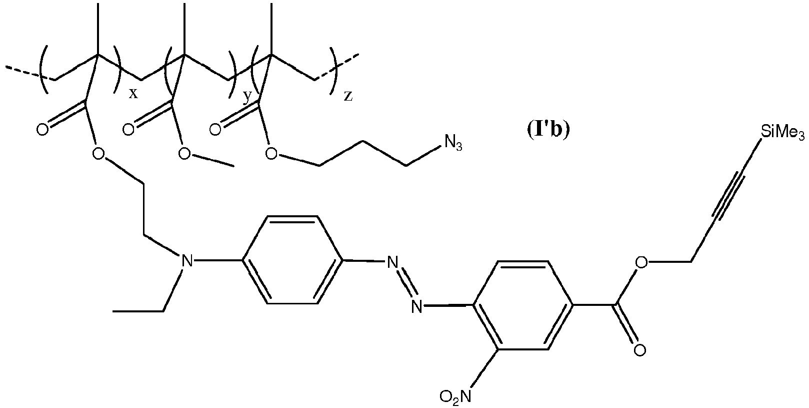 avec x, y et z représentant chacun indépendamment l'un de l'autre un nombre entier compris entre 0 et 7, étant entendu que seul l'un parmi x, y, z peut représenter 0 ; de préférence les combinaisons de x, y et z étant choisies dans le groupe comprenant : x=3, y=3 et z=4 et x=3, y=0 et z=7.

Comme exemple de polymère de formule (III), on peut citer celui présentant la formule suivante :

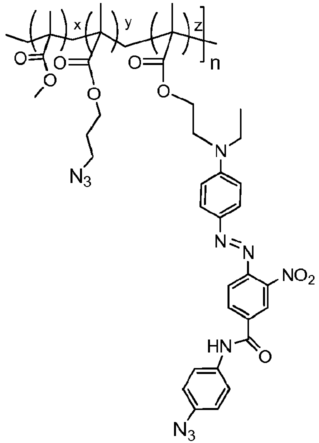

Ce polymère peut être réticulé par réaction de Huisgen thermique, selon le schéma 6 mentionné ci-dessus, à l'aide de l'un ou l'autre des produits (agents dopants) suivants :

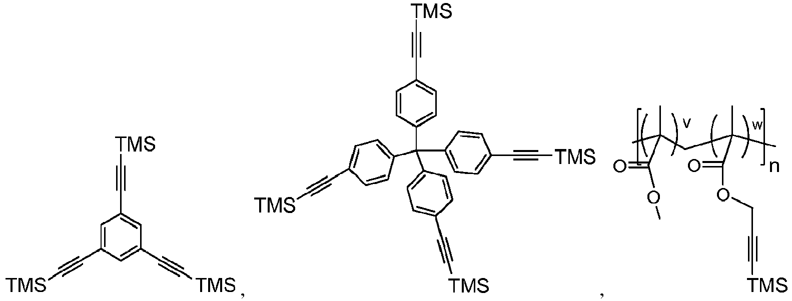

Comme exemple de polymère de formule (IV), on peut citer celui présentant la formule suivante :

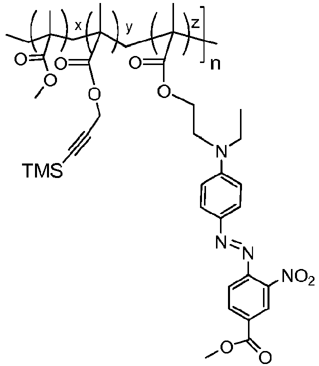

Ce polymère peut être réticulé par réaction de Huisgen thermique, selon le schéma 7 mentionné ci-dessus, à l'aide de l'un ou l'autre des produits (agents dopants) suivants :

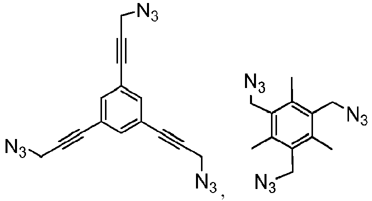

Un exemple de mise en oeuvre de la réticulation selon le schéma réactionnel 5, consiste à faire réagir les deux produits suivants :

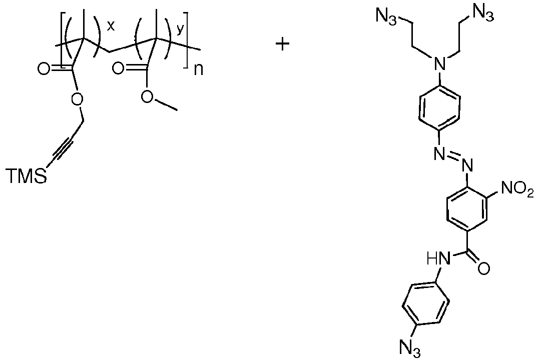

Les polymères réticulables de l'invention sont très solubles et filmogènes et très adhérents au substrat, puisque des films monocouches d'épaisseurs supérieures au micromètre sont obtenus en une seule étape par induction centrifuge sur un support de verre ou de silicium.

Pour être utilisés comme matériaux électrooptiques, ces polymères doivent être orientés avant d'être réticulés.

Ainsi, selon un mode de réalisation avantageux du procédé conforme à l'invention, dans le cas de matériaux électrooptiques, la polymérisation par réaction de Huisgen est conduite après formation d'un film de polymère et orientation des chromophores.

Un tel procédé est caractérisé par le fait que l'on soumet le polymère aux étapes successives suivantes :
- formation d'un film,
- orientation des chromophores, et
- réticulation.

Le polymère mis en oeuvre dans ce procédé est un polymère présentant l'une des formules (I) à (IV) ci-dessus.

Dans les modes de réalisation mettant en oeuvre un procédé selon l'un des schémas 5 à 7, le matériau est constitué d'un mélange de deux produits différents qui seront réunis dans un solvant commun juste avant l'étape de préparation du film. La proportion relative des deux produits peut couvrir une plage assez importante ; de préférence on ajustera les quantités de sorte à ce que le rapport Y/W soit supérieur ou égale à 1. Les approches présentées aux schémas 5-7 offrent l'avantage de maintenir les fonctions de réticulation (Y et W) séparées l'une de l'autre et donc d'accroître la stabilité des matériaux lors du stockage avant la préparation des films.

La formation du film polymère se fait classiquement par induction centrifuge (spin coating) sur un support de préférence un support de verre ou de silicium. Cette étape est généralement suivie d'un recuit.

L'orientation des chromophores (poling) est réalisée ou bien à l'aide d'un champ pulsé ou bien à l'aide d'un fil conducteur qui est soumis à une tension électrique et qui est placé au-dessus du film.

L'étape d'orientation des chromophores et de réticulation comprend les stades suivants :
1. le chauffage du film à une température T1 ;
2. l'application d'une tension V entre le film et un fil conducteur placé à une distance d au-dessus du film, tout en maintenant la température à la valeur T1 pendant une durée D1;
3. le chauffage et le maintien du film à une température T2 pendant une durée D2 tout en maintenant la tension électrique ;
4. le refroidissement à la température ambiante, tout en maintenant la tension électrique ;
T1 étant située aux alentours de la température de transition vitreuse du polymère (Tg) ;
V étant compris entre 10V et 8 kV, de préférence entre 2 kV et 4 kV et plus préférentiellement encore d'environ 3,5kV ;
d étant compris entre 1 et 15 mm, de préférence entre 2 et 10mm et plus préférentiellement encore à environ 5mm ; T2 est compris entre 120 et 200°c, de préférence entre 130 et 170°c et plus préférentiellement encore d'environ 150°C ;
les durées D1 et D2 étant comprises indépendamment l'une de l'autre entre 30mn et 2h, de préférence entre 45mn et 1h30, et plus préférentiellement encore d'environ 1h.

Par « T1 étant située aux alentours de la température de transition vitreuse du polymère (Tg) », on entend à une température qui est d'environ 25°C supérieure ou inférieure à la Tg, de préférence de d'environ 20°C supérieure ou inférieure à la Tg, et plus préférentiellement encore d'environ 10°C supérieure ou inférieure à la Tg.

L'étape de formation du film est réalisée avec une solution du polymère dans un solvant choisi dans le groupe comprenant un solvant halogéné, de préférence un solvant chloré, et plus préférentiellement encore le trichloroéthane ou l'orthodichlorobenzène : la N-méthyl pyrrolidone ; le THF ; et leurs mélanges.

Le recuit est conduit à une température comprise entre 40 et 80°C, de préférence de 50 à 70°C et plus préférentiellement encore d'environ 60°C, pendant une durée de 30mn à 2h, de préférence de 45mn à 1h30 et plus préférentiellement encore d'environ 1h.

La température de réticulation est bien entendu modulable de façon significative en modifiant le substituant sur le groupe alcyne. Par exemple, le remplacement du groupe triméthylsilyle par un groupe méthyle permet d'augmenter la température de réticulation de manière très significative alors que son remplacement par un hydrogène permet de la diminuer.

L'invention porte également sur un matériau polymérisé réticulé selon le procédé décrit précédemment, qui présente une stabilité de l'orientation des chromophores telle que la diminution de la propriété optique non linéaire est inférieure à 5% après maintien dudit matériau pendant 1000 heures à une température de 85°C.

La température de transition vitreuse Tg du matériau réticulé est supérieure d'au moins 10°C, de préférence d'au moins 20°C et plus préférentiellement encore d'au moins 25°C, à celle du polymère à partir duquel il a été obtenu. Ces matériaux sont insolubles dans les solvants classiques tels que le THF ou les solvants halogénés, notamment chlorés, tels que l'orthodichlorobenzène.

Les films de matériau polymérisé réticulé selon le procédé de l'invention présentent une épaisseur (e) comprise entre 0,1 à 5 µm, de préférence de 0,5 à 3 µm et plus préférentiellement de 1 à 2µm. Bien qu'ils aient une épaisseur importante, ils présentent une bonne qualité optique. Des mesures de génération de seconde harmonique de ces films ont montré que ces polymères possèdent effectivement des coefficients électrooptiques (r₃₃) relativement élevés compte tenu de leurs concentrations en chromophores

De façon tout à fait avantageuse, le coefficient électrooptique r₃₃ du matériau polymérisé réticulé selon l'invention est indépendant de son épaisseur (e). Cette propriété est peu commune puisque généralement l'efficacité de l'orientation diminue avec l'épaisseur. Les chromophores ici s'orientent de manière relativement coopérative, vis-à-vis du processus d'orientation, car le rendement de l'étape d'orientation varie peu avec l'épaisseur des films. Ce point est important puisque le couplage d'une fibre optique à un guide d'onde de polymère nécessite une épaisseur significative pour ne pas engendrer trop de pertes d'énergie.

Compte tenu de leur simplicité de préparation à partir de précurseurs commerciaux et bon marché, de la filmabilité importante des polymères avant réticulation et de la bonne stabilisation de l'orientation des chromophores obtenue par la réticulation, le matériau polymérisé réticulé selon l'invention, est tout à fait approprié à des applications de télécommunications optiques et de traitement optique du signal.

La présente invention va être décrite plus en détails à l'aide des exemples suivants qui sont donnés à titre purement illustratif et qui ne sauraient en limiter la portée.

### EXEMPLES

### Exemple 1 : Préparation du DR1-PhN3 de formule :

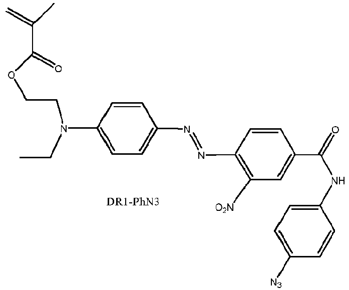

A une solution de 4'[N-(2-méthacryloxy éthyle)-N-éthyle]amino-2-nitro-4-carboxyazobenzène (1 g, 2,346 mmol, 1 équiv.) et de 4-azidoaniline (440 mg, 2,58 mmol, 1,1 équiv.) dans le THF (V=5 mL) est ajouté de la *N-*méthylmorpholine (V=0,77 mL, 7,04 mmol, 3 équiv.) puis du chlorure de (4-(4,6-diméthoxy-1,3,5-triazin-2-yle)-4-méthylmorpholine) (779 mg, 2,81 mmol, 1,2 équiv). La solution est agitée pendant 12h à la température ambiante à l'abri de la lumière. Le solvant est ensuite évaporé sous pression réduite pour donner le produit brut qui est purifié par chromatographie sur gel de silice avec du dichlorométhane comme éluant et conduit à 1,35 g de produit désiré (100%).
¹H NMR (300 MHz, CDCl₃), δ(ppm) : 8.32 (d, 1H, *J* = 1.8 Hz) ; 8.10 (dd, 1H, *J* = 8.4 Hz, *J* = 2.1 Hz) ; 7.87 (d, 2H, *J* = 9.3 Hz) ; 7.83 (d, 2H, *J =* 8.4 Hz) ; 7.67 (d, 2H, *J =* 9 Hz) ; 7.06 (d, 2H, *J* = 9 Hz) ; 6.80 (d, 2H, *J* = 9.3 Hz) ; 6.10 (s, 1H) ; 5.59 (s, 1H) ; 4.37 (t, 2H, *J* = 6.6 Hz) ; 3.73 (t, 2H, *J* = 6 Hz) ; 3.53 (q, 4H, *J* = 6.9 Hz) ; 1.94 (s, 3H) ; 1.26 (t, 3H, *J* = 7.2 Hz).
¹³C NMR (75 MHz, CDCl₃), δ (ppm) : 164.68 ; 151.80 ; 146.88 ; 143.39 ; 136.62 ; 135.83 ; 134.39 ; 134.27 ; 131.28 ; 126.98 ; 126.33 ; 122.70 ; 121.94 ; 119.69 ; 119.27 ; 113.97 ; 111.55 ; 61.65 ; 48.80 ; 21.76 ; 18.33 ; 12.28.
EI-MS : m/z ₜₕ = 542.2 ; m/z ₑₓₚ = 543.1 (MH⁺ ; 100 %) ; 515.1 (23 %) ; 382.2 (27 %).
UV - Vis: λₘₐₓ (CH₂Cl₂) ( ε (mol⁻¹ L cm⁻¹)) = 480 (28 200). FT-IR (KBr, cm⁻¹) : 2967 (ν_{st(CH2)}) ; 2114 (ν_{st(N3)}) ; 1717 (ν_{st(C=O)}); 1676, 1598 (ν_{st(C=C)}).

### Exemple 2 : Préparation du DR1-TMS de formule:

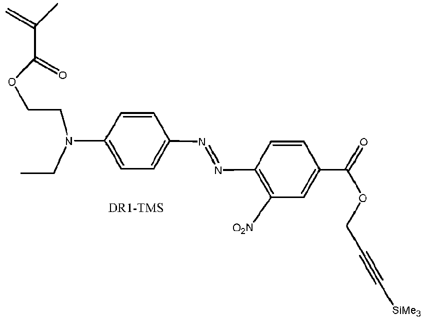

A une solution de 4'[N-(2-méthacryloxy éthyle)-N-éthyle]amino-2-nitro-4-carboxyazobenzène (1 g, 2,346 mmol, 1 équiv.) et d'alcool triméthylsilylpropargylique (0,38 mL, 2,58 mmol, 1,1 équiv.) dans le THF (V = 5 mL) est ajouté de la N-méthylmorpholine (V=0,77 mL, 7,04 mmol, 3 équiv.) puis du chlorure de (4-(4,6-diméthoxy-1, 3, 5-triazin-2-yle)-4-méthylmorpholine) (779 mg, 2,81 mmol, 1,2 équiv.). La solution est agitée pendant 12h à la température ambiante à l'abri de la lumière. Le solvant est ensuite évaporé sous pression réduite pour donner le produit brut qui est purifié par chromatographie sur gel de silice avec le mélange dichlorométhane/éther de pétrole (8/2) comme éluant et conduit à 1,64 g de produit désiré (95%).
¹H NMR (300 MHz, CDCl₃), δ (ppm) : 8.51 (d, 1H, *J* = 1.5 Hz) ; 8.26 (dd, 1H, *J* = 8.7 Hz, *J* = 1.5 Hz) ; 7.87 (d, 2H, *J =* 9.3 Hz) ; 7.77 (d, 1H, *J* = 8.7 Hz) ; 6.80 (d, 2H, *J* = 9.3 Hz) ; 6.10 (s, 1H) ; 5.59 (s, 1H) ; 4.97 (s, 2H) ; 4.49 (t, 2H, *J* = 5.4 Hz) ; 4.37 (t, 2H, *J* = 6.3 Hz) ; 3.73 (t, 2H, *J* = 6 Hz) ; 3.55 (q, 2H, *J* = 7.2 Hz) ; 1.93 (s, 3H) ; 1.25 (t, 3H, *J* =.6.9 Hz).
¹³C NMR (75 MHz, CDCl₃), δ (ppm) : 151.96 ; 148.81 ; 144.34 ; 135.97 ; 133.83 ; 129.46 ; 129.00 ; 127.14 ; 126.47 ; 125.68 ; 118.89 ; 111.69 ; 98.44 ; 94.78 ; 93.16 ; 65.93 ; 61.79 ; 54.06 ; 48.94 ; 45.84 ; 18.49 ; 12.42 ; -0.18.
EI-MS : m/z ₜₕ = 536.2 ; m/z ₑₓₚ = 537.3 (MH⁺˙).
UV - Vis: λₘₐₓ (CH₂Cl₂) (ε (mol⁻¹ L cm⁻¹)) = 482 (31 600). FT-IR (KBr, cm⁻¹) : 2968 (ν_{st(CH2)}) ; 2186 (ν_{st(C≡C)}) ; 1717 (ν_{st(C=O)}) ; 1676, 1598 (ν_{st(C=C)}).

### Exemple 3 : Préparation de polymères :

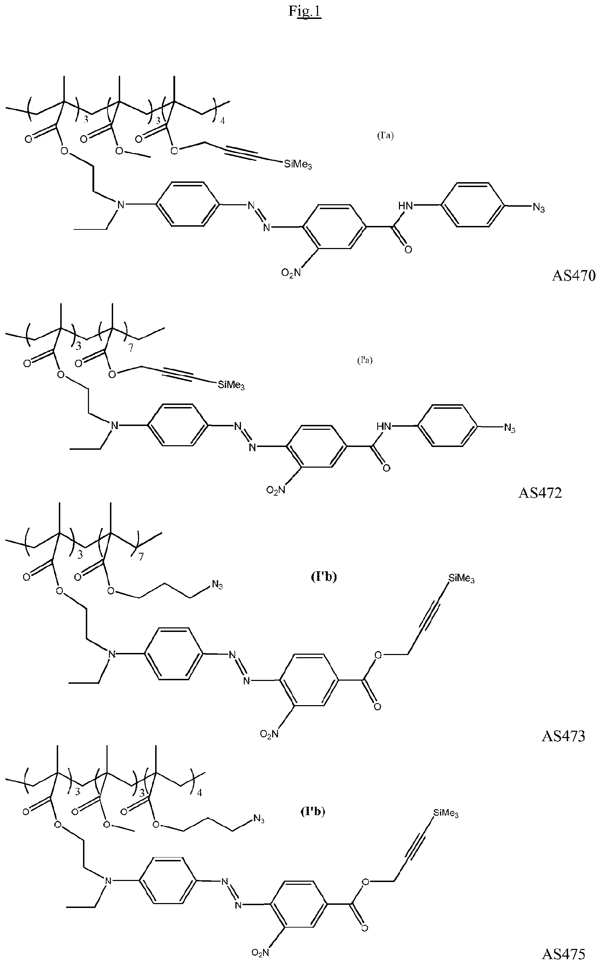

Deux polymères de formule (Ia) (désignés par AS470 et AS472) et deux polymères de formule (Ib) (désignés par AS475 et AS473) ont été préparés selon le protocole suivant. Leurs formules respectives sont présentées sur la figure 1.

Dans un schlenck sous argon, préalablement séché sous vide, les différents réactifs (monomères dont la nature et la quantité est donnée dans le tableau 1) et amorceur radicalaire AIBN (azobisisobutyronitrile) (0,03 équiv.) sont introduits à la température ambiante, et le mélange est dégazé par une succession de cycles de congélation/vide/décongélation, afin d'éliminer toute trace d'oxygène, puis le mélange est placé sous atmosphère d'argon. Le mélange réactionnel est porté à la température de 70°C sous agitation pendant 18 heures à l'abri de la lumière. Après retour à température ambiante, le produit est précipité dans le méthanol (10 vol équiv.), puis le polymère est lavé et isolé par centrifugation.

On a obtenu les rendements suivants .
75% pour AS470, 50% pour AS472, 52% pour AS473 et 79% pour AS475.

La masse moléculaire en nombre ainsi que l'indice de polymolécularité ont été déterminés par chromatographie d'exclusion stérique en utilisant le polystyrène en tant que référence, et on a obtenu :
Pour AS470 : Mn = 7 600; Ip = 1,8
Pour AS472: Mn = 7 100; Ip = 1,9
Pour AS473: Mn = 18 600 ; Ip = 1,4
Pour AS475:Mn = 13 400 ; Ip = 1,4.

Pour chacun de ces polymères la température de transition vitreuse a été mesurée par DSC et les résultats sont donnés dans le tableau 1 ci-après.

A titre de comparaison, les propriétés d'un système de réticulation connu ont également été étudiées. Il s'agit du polymère PIII développé par Bosc et *coll.* basé sur la réaction d'un époxyde avec une fonction acide carboxylique.¹²

Les mêmes paramètres que ceux mesurés pour les polymères de l'invention ont été mesurés pour le polymère PIII. Les résultats sont également donnés dans le Tableau 1.

### EXEMPLE 4 : Préparation des films et réticulation

On a préparé séparément, en utilisant le même protocole, 5 films différents avec chacun des polymères préparés dans l'exemple 3.

On a préparé une solution à 250 g/L de polymère dans l'orthodichlorobenzène préalablement distillé sur CaH₂. Après filtration sur une membrane en PVDF (difluorure de polyvinylidène) de 0,2 µm de diamètre de pore, celle-ci est déposée sur un substrat de verre nettoyé et séché. Des films homogènes sont obtenus par induction centrifuge suivie d'un recuit à 60°C pendant 1 heure. Ces films sont ensuite orientés et réticulés en quatre étapes : tout d'abord, ils sont chauffés à 90°C (10°C au-dessus de la Tg) ; lorsque cette température est atteinte, une tension de 3,5 kV est ensuite appliquée entre le film et un fil de tungstène situé 5 mm au-dessus du film. Cette tension est maintenue 1 heure à 90°C puis, dans une troisième étape, le film est chauffé à 150°C pendant 1 heure supplémentaire afin de réaliser la réticulation complète du polymère. Enfin, pour figer l'orientation des chromophores, le film est refroidi à la température ambiante en maintenant le champ électrique.

### EXEMPLE 5 :

Pour chacun des films obtenus à l'exemple 4, on a déterminé l'épaisseur du film, la température de réticulation par DSC au maximum du pic exothermique, et le coefficient électrooptique r₃₃ à 1064 nm.

Les différents résultats sont rassemblés dans le tableau 1 ci-dessous.

**Tableau 1**

| Polymère | x, y, z | Mn (g/mol) | Ip | Tg (°C) | T_{réticulation} (°C) | épaisseur (µm) | r₃₃ (pm/V) |
|---|---|---|---|---|---|---|---|
| AS470, Formule Ia | 3, 3, 4 | 7 600 | 1,8 | 75 | 166 | 2,7 | 13,3 |
| AS472, Formule Ia | 3, 0, 7 | 7 100 | 1,9 | 77 | 168 | 2,2 | 14,7 |
| AS475, Formule Ib | 3, 3, 4 | 13 400 | 1,4 | 69 | 164 | 1,2 | 15,7 |
| AS473, Formule Ib | 3, 0, 7 | 18 600 | 1,4 | 72 | 168 | 1,7 | 14 |
| PIII (comparatif) | 3, 7 | 2900 | 1,3 | 65 | 150 | 0,8 | 16 |

| | | | | | | | |
|---|---|---|---|---|---|---|---|
| Pour la formule Ia : x=DR₁-PhN₃, y=PMMA, z= PMA-TMS Pour la formule Ib : x=DR₁-TMS, y=PMMA, z=PMA-N₃ | | | | | | | |

### EXEMPLE 6 : vérification de la réticulation

Le polymère AS475 tel que préparé à l'exemple 3, a été appliqué en film par spin-coating. Ce film était soluble dans le THF et l'orthodichlorobenzène.

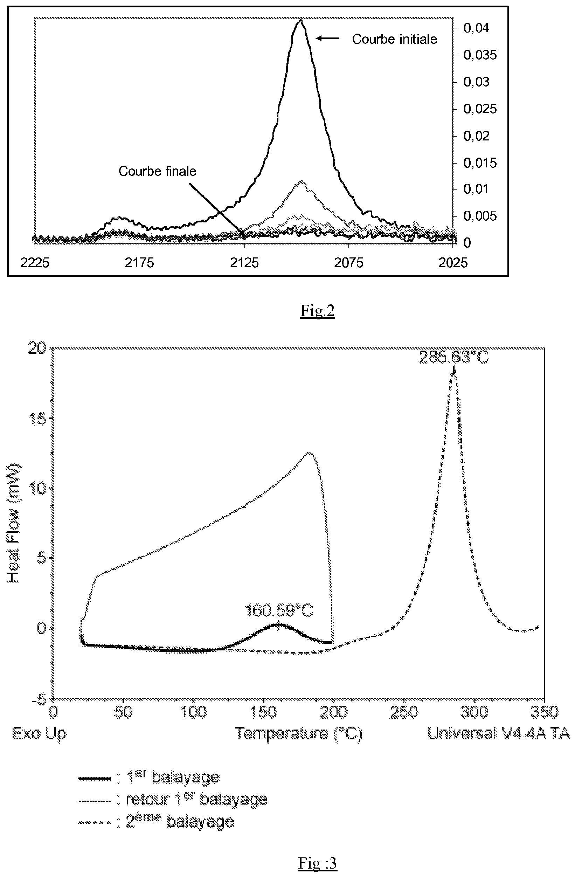

On a suivi l'intensité de la bande IR du vibrateur N₃ situé au alentour de 2100 cm⁻¹ au cours du chauffage à 160°C. Les résultats sont représentés sur la Figure 2.

On a ensuite essayé de dissoudre le film réticulé dans le THF et dans l'orthodichlorobenzène, mais celui-ci ne s'est pas dissous dans ces solvants.

La figure 2 est un diagramme représentant les spectres IR, entre 2 225 et 2 025 cm⁻¹, du polymère AS475. La « courbe initiale » représente le spectre IR au temps t0, c'est-à-dire à la température ambiante et la « courbe finale » représente le spectre IR au temps tf, (tf = 36 min.) c'est-à-dire quand la température a atteint 160°C. Les autres courbes sont des spectres IR obtenus à des températures intermédiaires.

Il ressort de cette figure que la bande IR du vibrateur N₃ disparaît au cours du chauffage, démontrant ainsi la réticulation du polymère AS475.

### EXEMPLE 7 :

Le polymère AS472 tel que préparé à l'exemple 3 a été soumis à une analyse par calorimétrie différentielle à balayage (en anglais, DSC : Differential Scanning Calorimetry) représentée sur la figure 3. Cette analyse montre l'intervention d'un processus exothermique à partir de 120°C et dont le maximum se situe à 160°C. Ce processus correspond à la réaction de cycloaddition-1,3 de Huisgen. La caractérisation de cette réaction a été confirmée par l'identification des produits de cette transformation chimique par le chauffage en solution de composés modèles (résultats non présentés).

D'autre part, le polymère AS472 initialement soluble dans les solvants organiques usuels (THF ou orthodichlorobenzène entre autre) devient insoluble après réticulation.

### EXEMPLE 8 :

On a suivi le signal de génération de la seconde harmonique en fonction de la température du film de polymère AS472 orienté mais non réticulé, du film de polymère AS472 orienté et réticulé obtenu à l'exemple 4 et du polymère orienté et réticulé PIII.

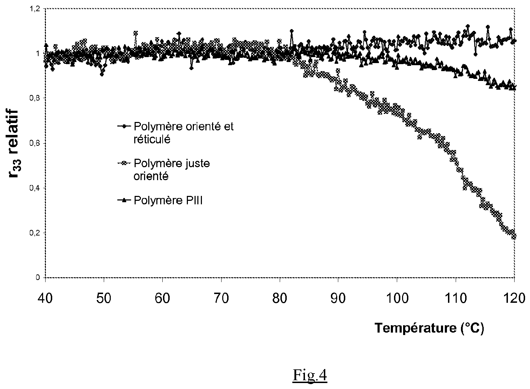

La valeur du r33 relatif a été reportée pour chaque polymère au cours d'une montée en température de 40 à 120°C à raison de 2°C/mn. Les résultats sont présentés sur la figure 4.

Il ressort de la figure 4 que le signal du film réticulé AS472 ne subit aucune perte jusqu'à la température de 120°C alors que celui du même polymère non-réticulé chute à partir de 100°C, pour la même concentration en chromophore. La réponse électrooptique d'un polymère concurrent (PIII) commence quant à elle à chuter de façon significative à partir de la température de 100°C.¹²

Le polymère réticulé présente donc une très bonne stabilité de l'orientation des chromophores.

### Références :

(1) Lee, M., "Dielectric constant and loss tangent in LiNbO3 crystals from 90 to 147 GHz", Appl. Phys. Lett. 2001, 79, 1342 -1344.
(2) Kang, H.; Facchetti, A.; Jiang, H.; Cariati, E.; Righetto, S.; Ugo, R.; Zuccaccia, C.; Macchioni, A.; Stem, C. L.; Liu, Z.; Ho, S.-T.; Brown, E. C.; Ratner, M. A.; Marks, T. J., "Ultralarge Hyperpolarizability Twisted -Electron System Electro-Optic Chromophores: Synthesis, Solid-State and Solution-Phase Structural Characteristics, Electronic Structures, Linear and Nonlinear Optical Properties, and Computational Studies", J. Am. Chem. Soc. 2007, 129, 3267-3286.
(3) Enami, Y.; Derose, C. T.; Mathine, D.; Loychik, C.; Greenlee, C.; Norwood, R. A.; Kim, T. D.; Luo, J.; Tian, Y.; Jen, A. K. Y.; Peyghambarian, N., "Hybrid polymer/sol-gel waveguide modulations with exceptionally large electro-optic coefficients", Nature Photonics 2007, 1, 423.
(4) Luo, J.; Huang, S.; Cheng, Y.-J.; Kim, T.-D.; Shi, Z.; Zhou, X.-H.; Jen, A. K. Y., "Phenyltetraene-Based Nonlinear Optical Chromophores with Enhanced Chemical Stability and Electrooptic Activity", Org. Lett. 2007, 9, 4471-4474.
(5) Jen, A.; Luo, J.; Kim, T.-D.; Chen, B.; Jang, S.-H.; Kang, J.-W.; Tucker, N. M.; Hau, S.; Tian, Y.; Ka, J.-W.; Haller, M.; Liao, Y.; Robinson, B.; Dalton, L.; Herman, W., "Exceptional electro-optic properties through molecular design and controlled self-assembly", Proc. SPIE 2005, 5935, 593506/593501-593506/593513; Dalton, L.; Robinson, B.; Jen, A.; Ried, P.; Eichinger, B.; Sullivan, P.; Akelaitis, A.; Bale, D.; Haller, M.; Luo, J.; Liu, S.; Liao, Y.; Firestone, K.; Bhatambrekar, N.; Bhattacharjee, S.; Sinness, J.; Hammond, S.; Buker, N.; Snoeberger, R.; Lingwood, M.; Rommel, H.; Amend, J.; Jang, S.-H.; Chen, A.; Steier, W., "Electro-optic coefficients of 500 pm/V and beyond for organic materials", Proc. SPIE 2005, 5935, 593502/593501-593502/593512.
(6) Dalton, L. R.; Steier, W. H.; Robinson, B. H.; Zhang, C.; Ren, A.; Garner, S.; Chen, A.; Londergan, T.; Irwin, L.; Carlson, B.; Fifield, L.; Phelan, G.; Kincaid, C.; Amend, J.; Jen, A., "From molecules to opto-chips: organic electro-optic materials", J. Mater. Chem. 1999, 9, 1905-1920.
(7) Burland, D. M.; Miller, R. D.; Walsh, C. A., "Second-order nonlinearity in poled-polymer systems", Chem. Rev. 1994, 94, 31-75.
(8) Haller, M.; Luo, J.; Li, H.; Kim, T.-D.; Liao, Y.; Robinson, B. H.; Dalton, L. R.; Jen, A. K. Y., "A Novel Lattice-Hardening Process To Achieve Highly Efficient and Thermally Stable Nonlinear Optical Polymers", Macromolecules 2004, 37, 688-690; Jen, K.-y.; Dalton, L. R.; Luo, J.; Haller, M. "Reversible crosslinking method for making an electro-optic polymer," **brevet** PCT Int. Appl. WO 2004065615, (University of Washington, USA). 2004.
(9) Huang, D. "Crosslinkable side-chain polyimides for NLO applications," **brevet** U.S. Pat. Appl. Publ. USA 2006049387, (Usa). 2006; Ma, H.; Chen, B.; Sassa, T.; Dalton, L. R.; Jen, A. K. Y., "Highly Efficient and Thermally Stable Nonlinear Optical Dendrimer for Electrooptics", J. Am. Chem. Soc. 2001, 123, 986-987; Zhang, C.; Fetterman, H. R.; Steier, W.; Michael, J. "Polymers containing polyene-bridged second-order nonlinear optical chromophores and devices incorporating the same," **brevet** PCT Int. Appl. Wo 2002029488, (Pacific Wave Industries, Inc., USA). 2002; Luo, J.; Haller, M.; Ma, H. L., S.; Kim, T.-D.; Tian, Y.; Chen, B.; Jang, S.-H.; Dalton, L. R.; Jen, A. K.-Y., "Nanoscale Architectural Control and Macromolecular Engineering of Nonlinear Optical Dendrimers and Polymers for Electro-Optics", J. Phys. Chem. B 2004,108, 8523-8530.
(10) Kuang, L.; Gao, J. P.; Wang, Z. Y. "Photo-reactive benzocyclobutenones and polymers therefrom for self-photocuring, photo-crosslinking and photopatterning without catalysts," **brevet** Can. Pat. Appl. Ca 2346149, (Carleton University, Can.). 2001.
(11) Bai, Y.; Song, N.; Gao, J. P.; Sun, X.; Wang, X.; Yu, G.; Wang, Z. Y., "A New Approach to Highly Electrooptically Active Materials Using Cross-Linkable, Hyperbranched Chromophore-Containing Oligomers as a Macromolecular Dopant", J. Am. Chem. Soc. 2005, 127, 2060-2061.
(12) Bosc, D.; Foll, F.; Boutevin, B.; Rousseau, A., "Synthesis of a novel difunctional NLO azo-dye chromophore and characterizations of crosslinkable copolymers with stable electrooptic properties", J. Appl. Polym. Sci. 1999, 74, 974-982; Foll, F.; Bosc, D.; Liang, J.; Rousseau, A.; Boutevin, B. "Preparation of curable polymers for use in nonlinear optical devices," **brevet** Eur. Pat. Appl. EP 641808, (France Telecom, Fr.). 1995.
(13) Levenson, R.; Liang, J.; Rossier, C.; Hierle, R.; Toussaere, E.; Bouadma, N.; Zyss, J., "Advances in organic polymer-based optoelectronics", ACS Symposium Series 1995, 601, 436-455; Luo, J.; Haller, M.; Li, H.; Tang, H.-Z.; Jen, A. K. Y.; Jakka, K.; Chou, C.-H.; Shu, C.-F., "A Side-Chain Dendronized Nonlinear Optical Polyimide with Large and Thermally Stable Electrooptic Activity", Macromolecules 2004, 37, 248-250.
(14) Rostovtsev, V. V.; Green, L. G.; Fokin, V. V.; Sharpless, K. B., "A Stepwise Huisgen Cycloaddition Process: Copper(I)-Catalyzed Regioselective "Ligation" of Azides and Terminal Alkynes", Angew. Chem. Int. Ed. 2002, 41, 2596-2599.
(15) Tornoe, C. W.; Christensen, C.; Meldal, M., " Peptidotriazoles on Solid Phase: [1,2,3]-Triazoles by Regiospecific Copper(I)-Catalyzed 1,3-Dipolar Cycloadditions of Terminal Alkynes to Azides ", J. Org. Chem. 2002, 67, 3057-3064.
(16) Binder, W. H.; Sachsenhofer, R., "'Click' chemistry in polymer and materials science", Macromol. Rapid Comm. 2007, 28, 15-54.
(17) Bock, V. D.; Hiemstra, H.; van Maarseveen, J. H., "Cu(I)-catalyzed alkyne-azide click cycloadditions from a mechanistic and synthetic perspective", Eur. J. Org. Chem. 2005, 51-68.
(18) Fournier, D.; Hoogenboom, R.; Schubert, U. S., "Clicking polymers: A straightforward approach to novel macromolecular architectures", Chem. Soc. Rev. 2007, 36, 1369-1380.
(19) Lutz, J.-F., "1,3-dipolar cycloadditions of azides and alkynes: a universal ligation tool in polymer and materials science", Angew. Chem. Int. Ed. Engl. 2007, 46, 1018-1025.
(20) Diaz, D. D.; Punna, S.; Holzer, P.; McPherson, A. K.; Sharpless, K. B.; Fokin, V. V.; Finn, M. G., "Click chemistry in materials synthesis. 1. Adhesive polymers from copper-catalyzed azide-alkyne cycloaddition", J. Polym. Sci., Pol. Chem. 2004, 42, 4392-4403.
(21) Cohen, H. L., "The preparation and reactions of polymeric azides. II. The preparation and reactions of various polymeric azides", J. Polym. Sci., Pol. Chem. 1981, 19, 3269-3284; Cohen, H. L., "The preparation and reactions of polymeric azides. I. The reaction of poly(vinylbenzyl azide) with acetylenic and olefinic derivatives", J. Polym. Sci., Pol. Chem. 1981, 19, 1337-1347.
(22) Ladmiral, V.; Mantovani, G.; Clarkson, G. J.; Cauet, S.; Irwin, J. L.; Haddleton, D. M., "Synthesis of Neoglycopolymers by a Combination of \"Click Chemistry\" and Living Radical Polymerization", J. Am. Chem. Soc. 2006,128, 4823-4830.
(23) Sumerlin, B. S.; Tsarevsky, N. V.; Louche, G.; Lee, R. Y.; Matyjaszewski, K., "Highly efficient \"click\" functionalization of poly(3-azidopropyl methacrylate) prepared by ATRP", Macromolecules 2005, 38, 7540-7545.
(24) James, N. R.; Jayakrishnan, A., "Synthesis, polymerization, and copolymerization of aliphatic vinyl azide", J. Appl. Polym. Sci. 2003, 87, 1852-1857.
(25) Li, Y.; Yang, J.; Benicewicz, B. C., "Well-controlled polymerization of 2-azidoethyl methacrylate at near room temperature and click functionalization", J. Polym. Sci., Pol. Chem. 2007, 45, 4300-4308.
(26) Vogt, A. P.; Sumerlin, B. S., "An Efficient Route to Macromonomers via ATRP and Click Chemistry", Macromolecules 2006, 39, 5286-5292.

## Revendications

1. Procédé de réticulation de polymères présentant des groupes chromophores, par réaction de Huisgen thermique, en l'absence de catalyseur.

2. Procédé de réticulation selon la revendication 1, **caractérisé par le fait qu'**au moins une fonction azide et au moins une fonction alcyne sont présentes sur l'un au moins du polymère ou de ses précurseurs.

3. Procédé selon la revendication 1 ou 2, **caractérisé par le fait que** la fonction azide et/ou la fonction alcyne est (sont) présente(s) sur les groupes chromophores.

4. Procédé selon l'une quelconque des revendications 1 à 3, **caractérisé par le fait que** le polymère présente une chaîne principale à base de monomères choisis dans le groupe comprenant les monomères acryliques, méthacryliques, vinyliques et leurs mélanges.

5. Procédé selon l'une quelconque des revendications 1 à 4, **caractérisé par le fait que** le groupe chromophore est un groupe chromophore à hyperpolarisabilité quadratique non nulle, de préférence de type «push-pull» et plus particulièrement présentant la structure générale D-π-A dans laquelle D est un donneur d'électrons, A est un accepteur d'électrons et n est un pont π.

6. Procédé selon l'une quelconque des revendications 1 à 5, **caractérisé par le fait que** la réticulation est faite selon l'un schéma réactionnel choisi dans le groupe comprenant : 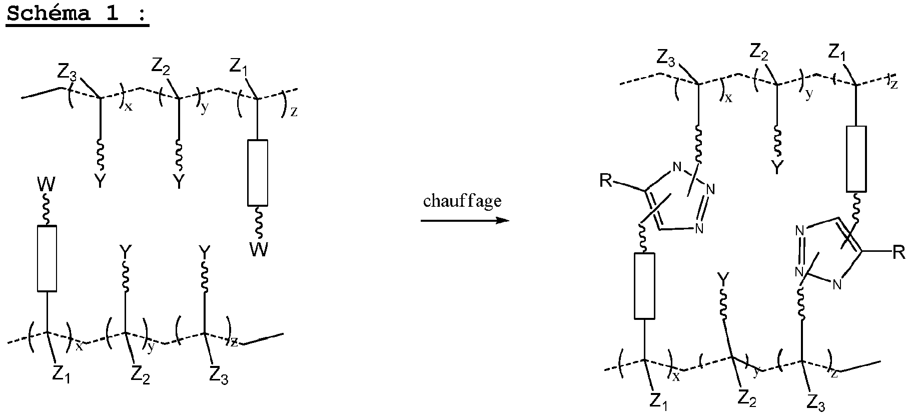 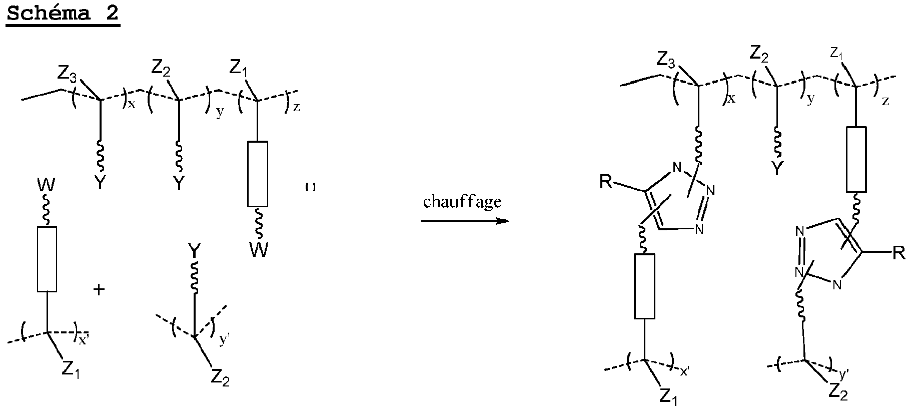 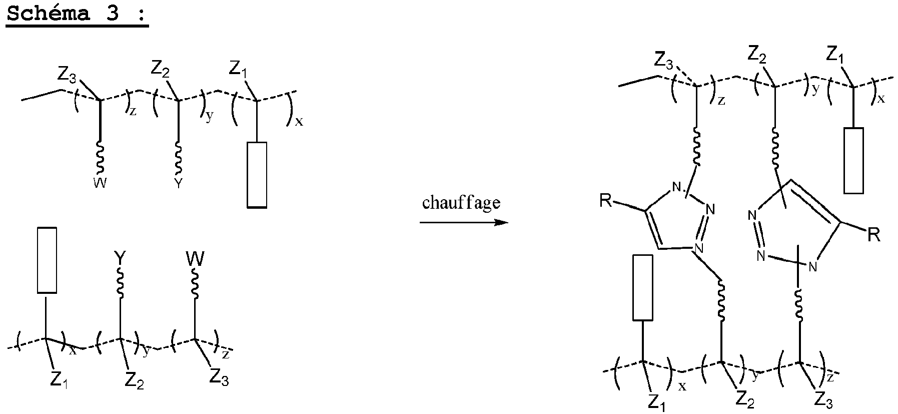 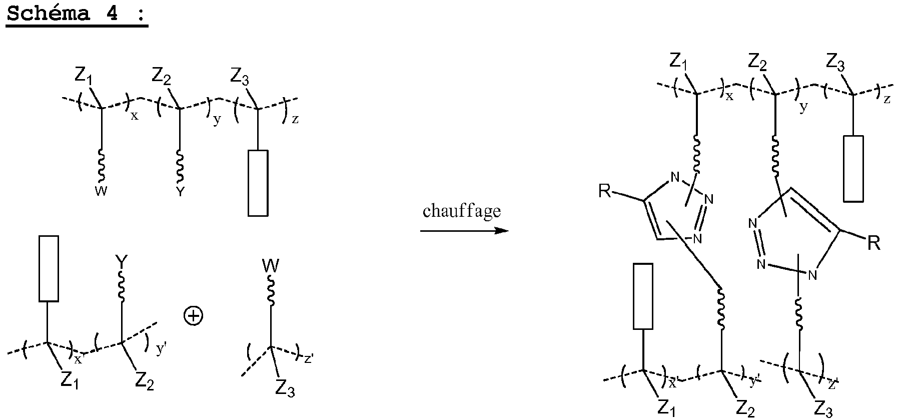 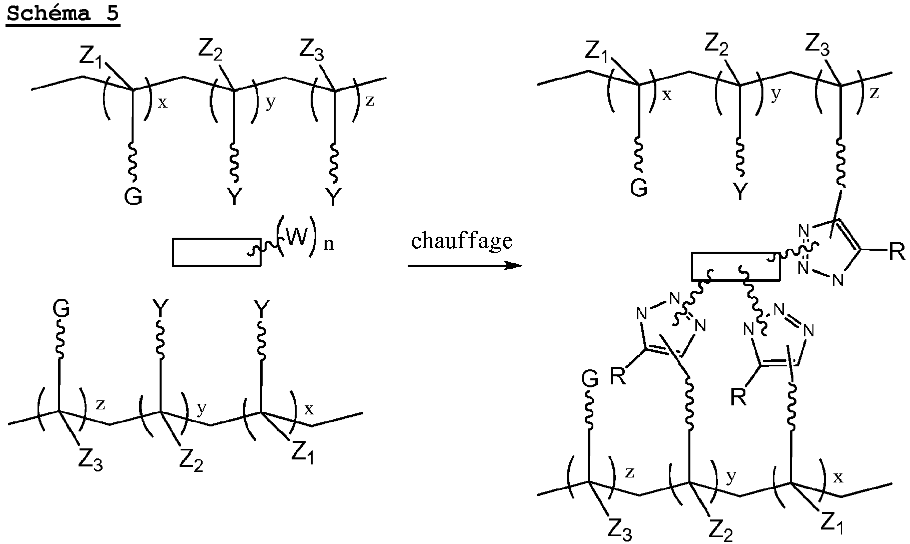 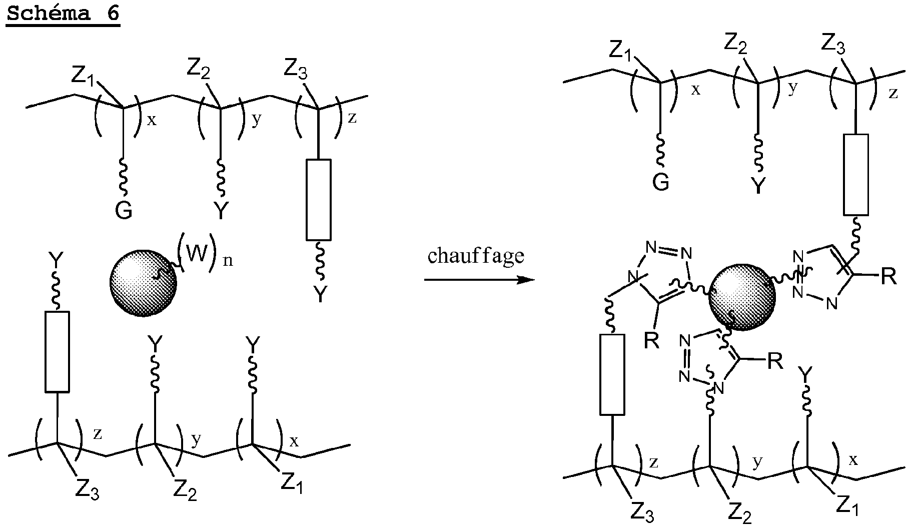 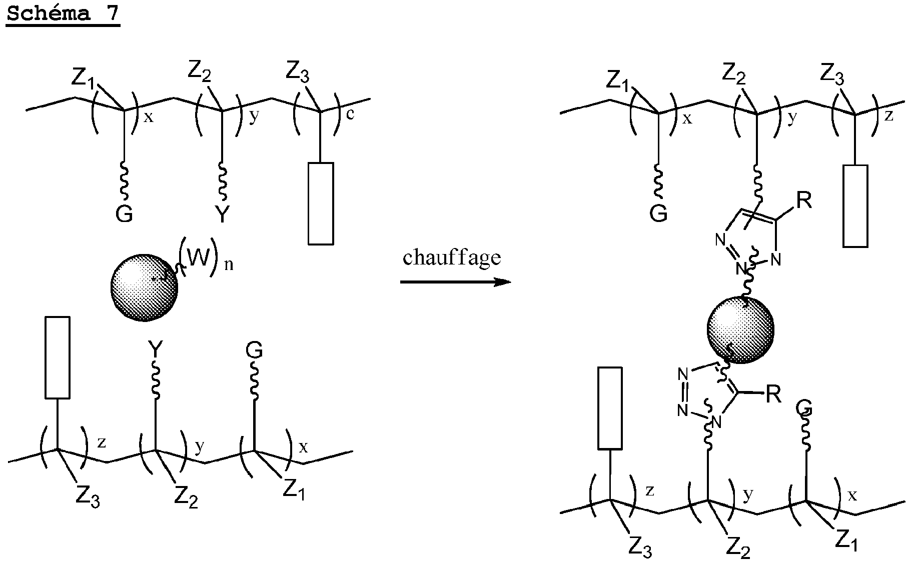 dans lesquels :
- 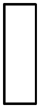 représente un chromophore à hyperpolarisabilité quadratique non nulle;
- Z₁, Z₂ et Z₃ représentent chacun indépendamment l'un de l'autre H, alkyle en C₁-C₄ ou phényle ;
- G est un groupe neutre vis-à-vis de la réticulation ;
- 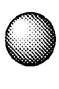 est une entité chimique quelconque ;
- n est un entier supérieur 1 ;
- 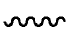 représente un connecteur;
- 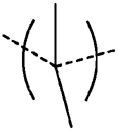 représente le motif répétitif du polymère ;
- x, y, z, x', y' et z' représentent chacun, indépendamment l'un de l'autre un nombre entier compris entre 0 et 100, de préférence entre 2 et 50 et plus préférentiellement encore entre 3 et 10, étant entendu que dans chacun des schémas réactionnels 2 parmi x, y , z et 2 parmi x', y' et z' soit non nuls,
- W et Y sont tels que lorsque Y représente N₃ alors W représente 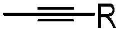 et lorsque W représente N₃ alors Y représente 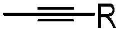 , R étant choisi dans le groupe comprenant H, une chaîne hydrocarbonée linéaire, ramifiée ou cyclique, saturée ou insaturée, renfermant ou non des unités aromatiques comportant éventuellement des hétéroatomes tels que O, S, N, et éventuellement substitué par des groupes électro-donneurs tels que - OCH₃, -N(alkyl)₂ ou par des groupes électro-accepteurs tels que -CN, -CO₂Alkyle, -NO₂, R peut également représenter un groupe protecteur de fonction éthylynique, de préférence un alkylsilyle, un arylsilyle ou un alkylarylsilyle, et plus préférentiellement encore le triméthylsilyle le triisopropylsilyle, le diméthyltertbutylsilyle, le diphényltertbutylsilyle ou le terphénylsilyle.

7. Procédé selon l'une quelconque des revendications 1 à 6, **caractérisé par le fait que** la réticulation par réaction de Huisgen est conduite à une température qui est de l'ordre de la température de transition vitreuse du polymère.

8. Procédé selon l'une quelconque des revendications 1 à 6, **caractérisé par le fait que** la température de réticulation par réaction de Huisgen est conduite à une température de 120° à 200°C, de préférence de 130° à 170°C, et plus préférentiellement encore d'environ 150°C.

9. Polymère chromophore thermo-réticulable par le procédé selon l'une quelconque des revendications 1 à 8, présentant la formule générale (I) à (IV): 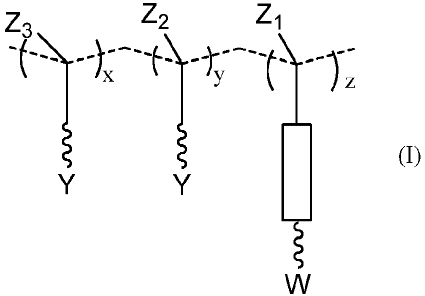 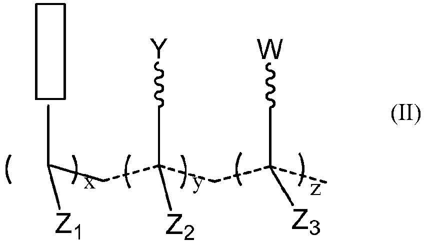 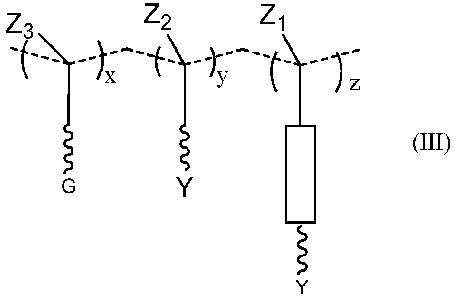 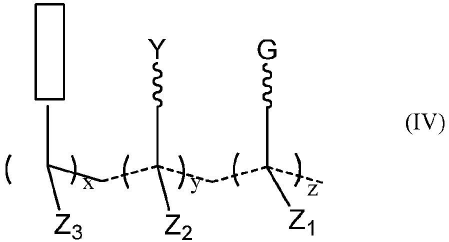 les différents éléments étant tels que définis à la revendication 6.

10. Polymère chromophore réticulable selon la revendication 9, qui est choisi dans le groupe comprenant :

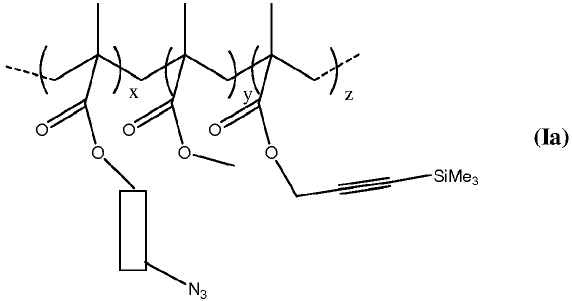

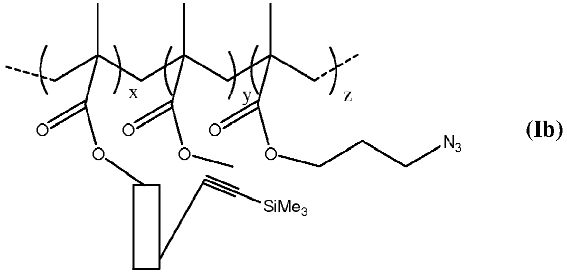

11. Polymère selon la revendication 9 ou 10, dans lequel le monomère est de type méthacrylique et le chromophore est un dérivé du Disperse Red One (DR1), et qui est choisi dans le groupe comprenant les polymères de formule (I'a) et (I'b) 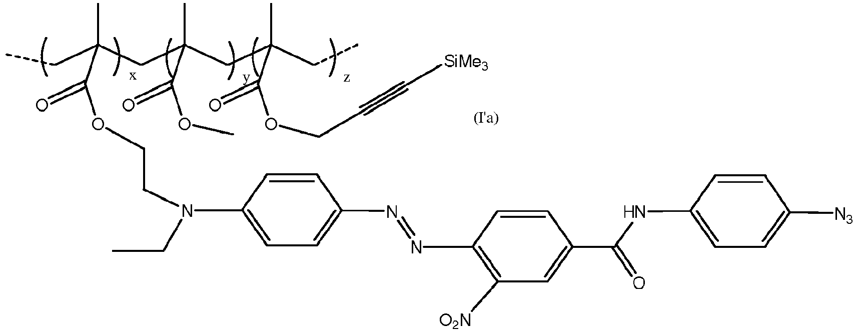 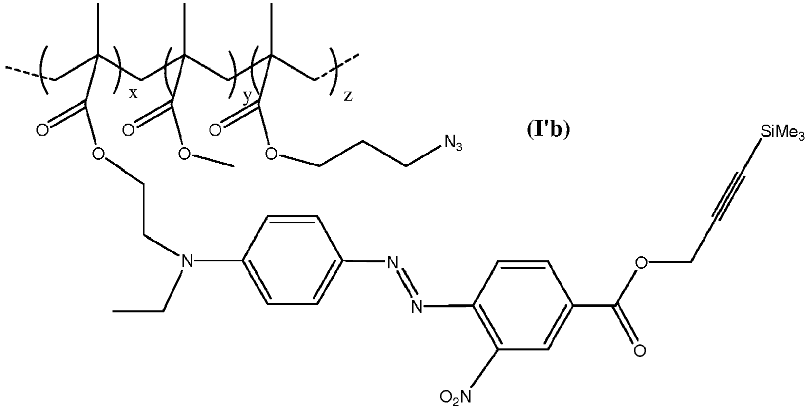 avec x, y et z représentant chacun indépendamment l'un de l'autre un nombre entier compris entre 0 et 7, étant entendu que seul l'un parmi x, y, z peut représenter 0 ; de préférence les combinaisons de x, y et z étant choisies dans le groupe comprenant :
x=3, y=3 et z=4 et x=3, y=0 et z=7.

12. Procédé selon l'une quelconque des revendications 1 à 8, **caractérisé par le fait que** l'on soumet le polymère tel que défini à l'une quelconque des revendications 9 à 11, aux étapes successives suivantes :
- formation d'un film ;
- orientation des chromophores ; et
- réticulation.

13. Procédé selon la revendication 12, **caractérisé par le fait que** l'étape d'orientation des chromophores et de réticulation comprend les stades suivants :
1. le chauffage du film à une température T1 ;
2. l'application d'une tension V entre le film et un fil conducteur placé à une distance d au-dessus du film tout en maintenant la température à la valeur T1 pendant une durée D1;
3. le chauffage et le maintien du film à une température T2 pendant une durée D2 tout en maintenant la tension électrique ;
4. le refroidissement à la température ambiante, tout en maintenant la tension électrique ;
T1 étant située à une température qui est d'environ 25°C supérieure ou inférieure à la Tg, de préférence de d'environ 20°C supérieure ou inférieure à la Tg, et plus préférentiellement encore d'environ 10°C supérieure ou inférieure à la Tg ;
V étant compris entre 10V et 8kV, de préférence entre 2kV et 4kV et plus préférentiellement encore d'environ 3,5kV ;
d étant compris entre 1 et 15 mm, de préférence entre 2 et 10mm et plus préférentiellement encore à environ 5mm ;
T2 est compris entre 120 et 200°c, de préférence entre 130 et 170°c et plus préférentiellement encore d'environ 150°C ;
les durées D1 et D2 étant comprises indépendamment l'une de l'autre entre 30mn et 2h, de préférence entre 45mn et 1h30, et plus préférentiellement encore d'environ 1h.

14. Procédé selon la revendication 11 ou 12, **caractérisé par le fait que** l'étape de formation du film est réalisée par induction centrifuge avec une solution du polymère dans un solvant choisi dans le groupe comprenant un solvant halogéné, de préférence un solvant chloré, et plus préférentiellement encore, le trichloroéthane ou l'orthodichlorobenzène ; la N-méthyl pyrrolidone ; le THF ; et leurs mélanges.

15. Procédé selon la revendication 14, **caractérisé par le fait que** l'induction centrifuge est suivie d'un recuit, le recuit étant conduit à une température comprise entre 40 et 80°C, de préférence de 50 à 70°C et plus préférentiellement encore d'environ 60°C, pendant une durée de 30mn à 2h, de préférence de 45mn à 1h30 et plus préférentiellement encore d'environ 1h.

16. Matériau polymérisé réticulé selon le procédé de l'une quelconque des revendications 1 à 8 et 11 à 15, présentant une stabilité de l'orientation des chromophores telle que la diminution de la propriété optique non linéaire est inférieure à 5% après maintien dudit matériau pendant 1000 heures à une température de 85°C.

17. Matériau polymérisé réticulé selon le procédé de l'une quelconque des revendications 1 à 8 et 11 à 15, présentant une Tg supérieur d'au moins 10°C, de préférence d'au moins 20°C et plus préférentiellement encore d'au moins 25°C à celle du polymère à partir duquel il a été obtenu.

18. Matériau polymérisé réticulé selon le procédé de l'une quelconque des revendications 1 à 8 et 11 à 15, qui est insoluble dans le THF et dans les solvants halogénés, notamment chlorés tels que l'orthodichlorobenzène.

19. Matériau polymérisé réticulé selon le procédé de l'une quelconque des revendications 1 à 8 et 11 à 15, qui est sous la forme d'un film d'une épaisseur (e) comprise entre 0,1 à 5 µm, de préférence de 0,5 à 3 µm et plus préférentiellement de 1 à 2µm.

20. Matériau polymérisé réticulé selon le procédé de l'une quelconque des revendications 1 à 8 et 11 à 15, **caractérisé par le fait que** son coefficient électrooptique r₃₃ est indépendant de son épaisseur (e).

21. Utilisation d'un matériau polymérisé réticulé selon le procédé de l'une quelconque des revendications 1 à 8 et 11 à 15, pour des applications de télécommunications optiques et de traitement optique du signal.

## Patentansprüche

1. Verfahren zum Vernetzen von Polymeren mit chromophoren Gruppen durch thermische Huisgen-Reaktion in Abwesenheit eines Katalysators.

2. Verfahren zum Vernetzen gemäß Anspruch 1, **dadurch gekennzeichnet, dass** mindestens eine Azid-Funktion und mindestens eine Alkin-Funktion an mindestens einem von dem Polymer oder seinen Vorläufern vorhanden sind.

3. Verfahren gemäß Anspruch 1 oder 2, **dadurch gekennzeichnet, dass** die Azid- und/oder die Alkin-Funktion an den chromophoren Gruppen vorhanden ist/sind.

4. Verfahren gemäß einem der Ansprüche 1 bis 3, **dadurch gekennzeichnet, dass** das Polymer eine Hauptkette auf Basis von Monomeren aufweist, die ausgewählt sind aus der Gruppe umfassend Acrylmonomere, Methacrylmonomere, Vinylmonomere und Gemische davon.

5. Verfahren gemäß einem der Ansprüche 1 bis 4, **dadurch gekennzeichnet, dass** die chromophore Gruppe eine chromophore Gruppe mit quadratischer Hyperpolarisierbarkeit von nicht null ist, vorzugsweise vom "push-pull"-Typ und insbesondere mit einer allgemeinen Struktur D-Pi-A, wobei D ein Elektronendonor, A ein Elektronenakzeptor und Pi eine Pi-Brücke ist.

6. Verfahren gemäß einem der Ansprüche 1 bis 5, **dadurch gekennzeichnet, dass** das Vernetzen gemäß einem Reaktionsschema durchgeführt wird, ausgewählt aus der Gruppe umfassend: 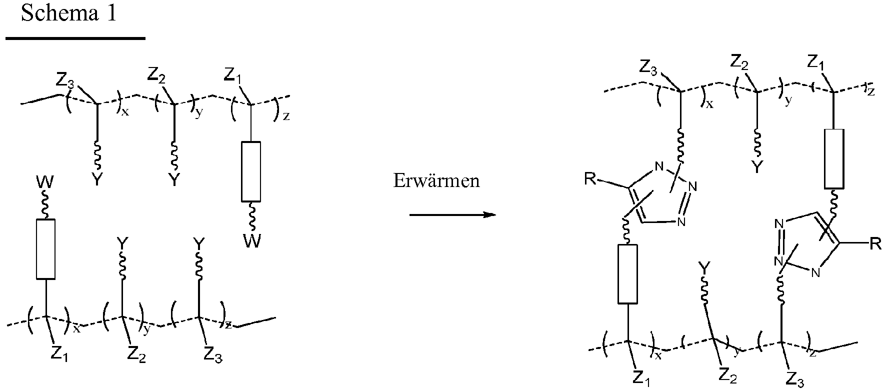 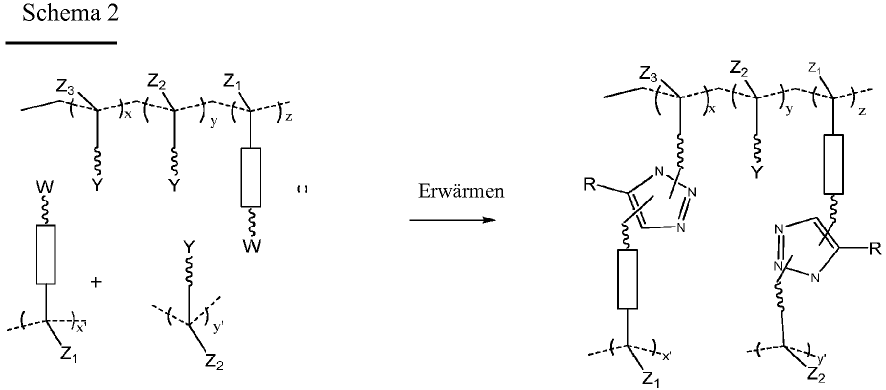 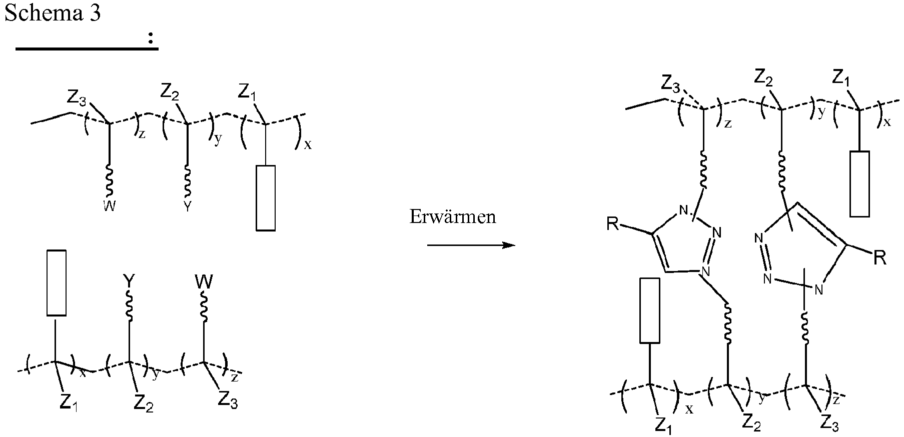 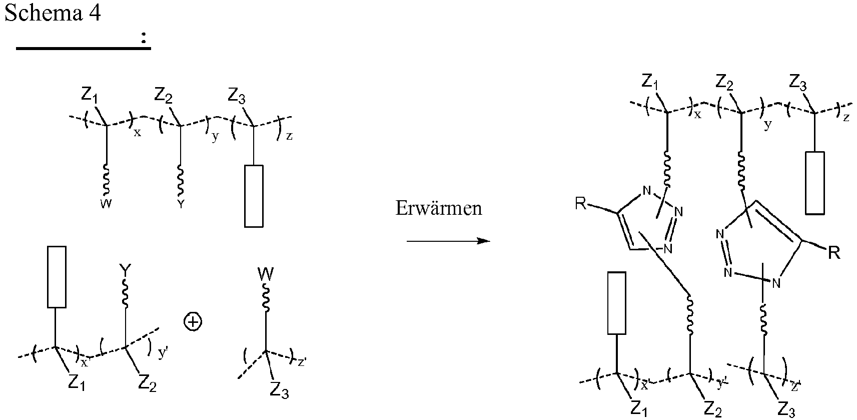 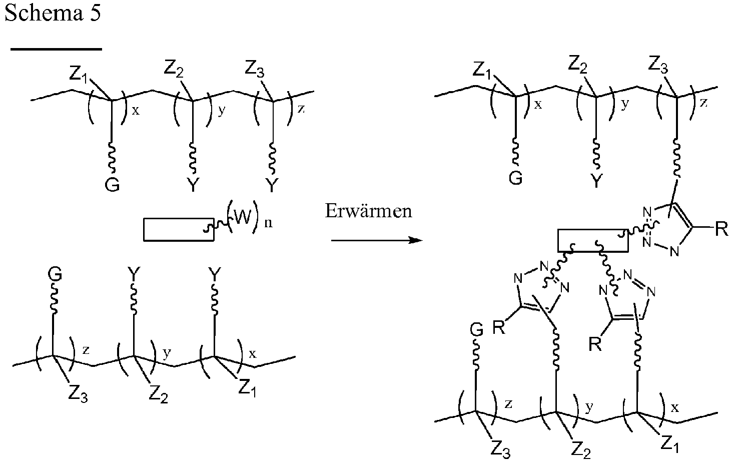 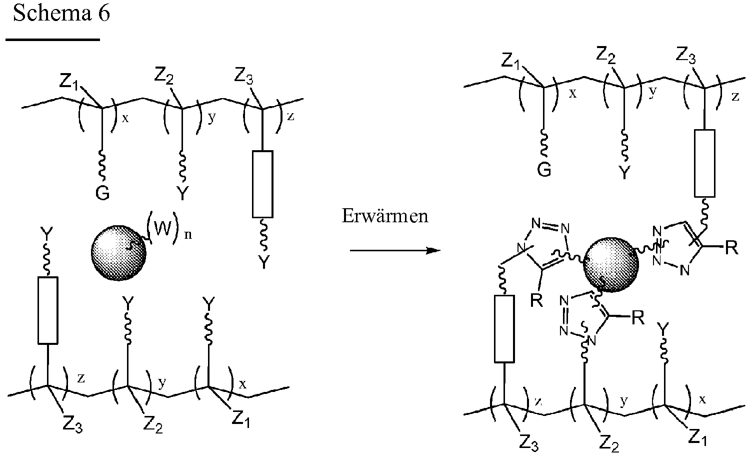 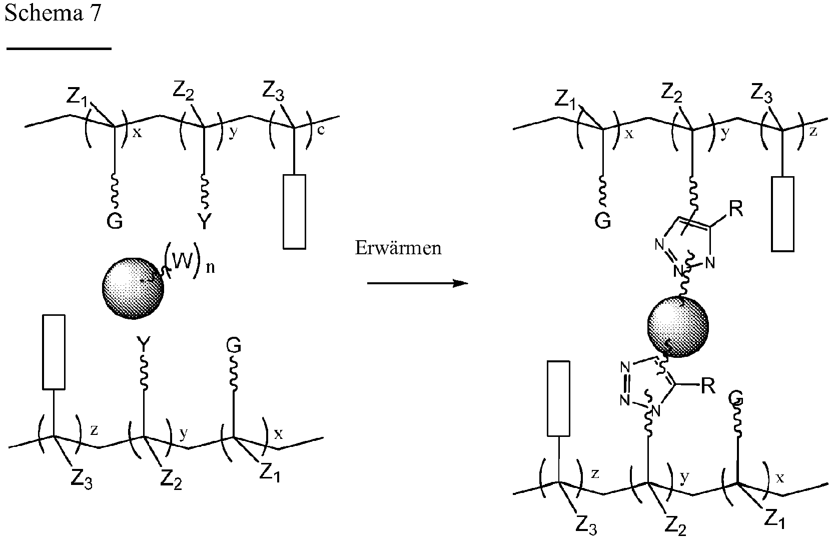 worin:
- 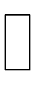 ein Chromophor mit quadratischer Hyperpolarisierbarkeit von nicht null darstellt;
- Z₁, Z₂ und Z₃ jeweils unabhängig voneinander H, C₁-C₄Alkyl oder Phenyl darstellen,
- G eine hinsichtlich der Vernetzung neutrale Gruppe ist,
- 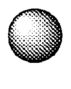 eine beliebige chemische Einheit ist,
- n eine ganze Zahl von größer als 1 ist;
- 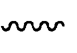 einen Linker darstellt;
- 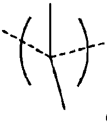 die Wiederholungseinheit des Polymers darstellt;
- x, y, z, x', y' und z' jeweils unabhängig voneinander eine ganze Zahl zwischen 0 und 100, vorzugsweise zwischen 2 und 50 und noch stärker bevorzugt zwischen 3 und 10 darstellen, mit der Maßgaben, dass in jedem der Reaktionsschemata 2 von x, y und z und 2 von x', y' und z' nicht null sind,
- W und Y derart sind, dass wenn Y N₃ darstellt, W 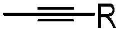 darstellt und wenn W N₃ darstellt, Y 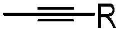 darstellt, wobei R ausgewählt ist aus der Gruppe umfassend H, einer linearen, verzweigten oder cyclischen gesättigten oder ungesättigten Kohlenwasserstoffkette, die aromatische Einheiten einschließt oder nicht, die gegebenenfalls Heteroatome wie O, S, N enthalten und gegebenenfalls mit Elektronendonorgruppen wie -OCH₃, -N(Alkyl)₂ oder Elektronenakzeptorgruppen wie -CN, -CO₂Alkyl, -NO₂ substituiert sind, R kann auch eine Schutzgruppe für eine Ethinylfunktion, vorzugsweise ein Alkylsilyl, ein Arylsilyl oder ein Alkylarylsilyl darstellen, und noch stärker bevorzugt Trimethylsilyl, Triisopropylsilyl, Dimethyltertbutylsilyl, Diphenyltertbutylsilyl oder Terphenylsilyl.

7. Verfahren gemäß einem der Ansprüche 1 bis 6, **dadurch gekennzeichnet, dass** das Vernetzen durch Huisgen-Reaktion bei einer Temperatur, die in der Größenordnung der Glasübergangstemperatur des Polymers liegt, durchgeführt wird.

8. Verfahren gemäß einem der Ansprüche 1 bis 6, **dadurch gekennzeichnet, dass** das Vernetzen durch Huisgen-Reaktion bei einer Temperatur von 120 bis 200°C, vorzugsweise von 130 bis 170°C und noch stärker bevorzugt bei etwa 150°C durchgeführt wird.

9. Chromophores Polymer das durch das Verfahren gemäß einem der Ansprüche 1 bis 8 thermisch vernetzbar ist, dargestellt durch die allgemeine Formel (I) bis (IV): 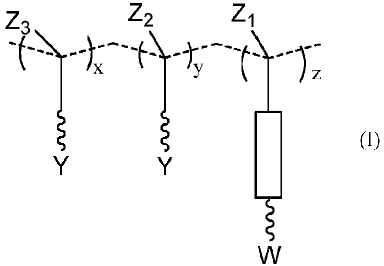 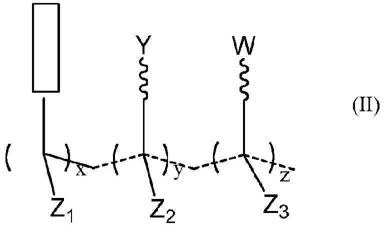 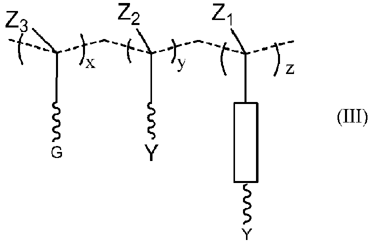 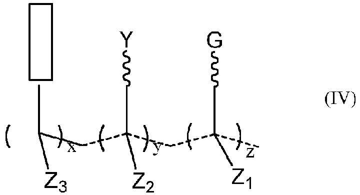 wobei die verschiedenen Elemente wie in Anspruch 6 definiert sind.

10. Vernetzbares chromophores Polymer gemäß Anspruch 9, das aus der Gruppe ausgewählt ist umfassend:

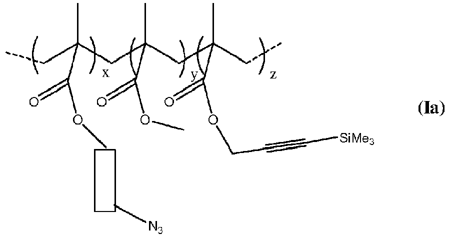

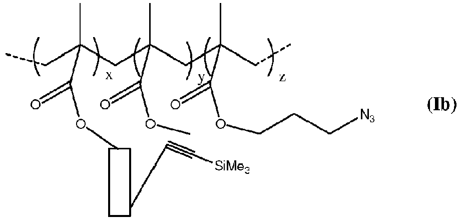

11. Polymer gemäß Anspruch 9 oder 10, wobei das Monomer vom Methacryltyp ist und das Chromophor ein Derivat von Disperse Red One (DR1) ist, und das ausgewählt ist aus der Gruppe umfassend die Polymere der Formel (I'a) und (I'b) 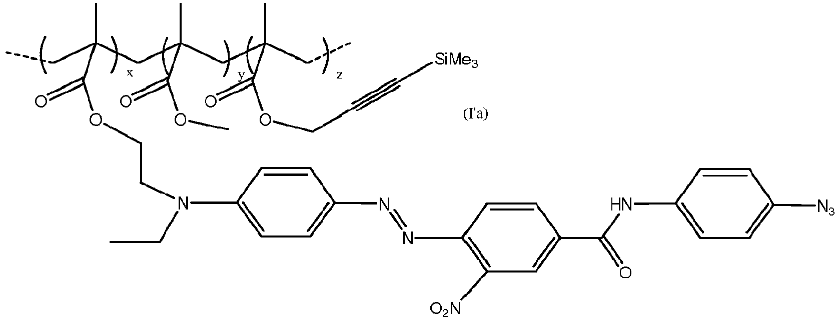 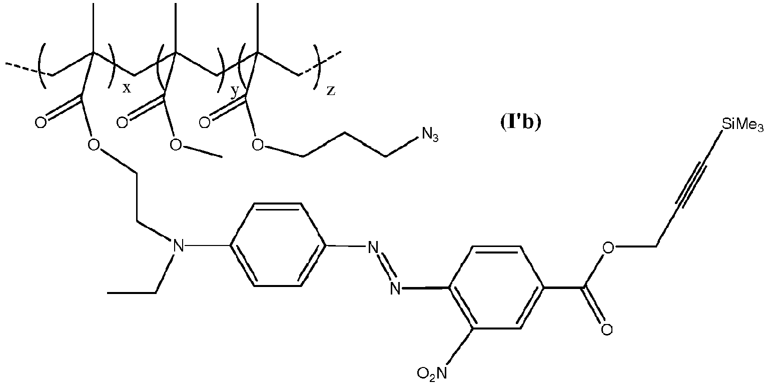 wobei x, y und z jeweils unabhängig voneinander eine ganze Zahl von 0 bis 7 darstellen, mit der Maßgaben, dass nur eines aus x, y und z 0 darstellen kann; wobei vorzugsweise die Kombinationen aus x, y und z ausgewählt sind aus der Gruppe umfassend:
x = 3, y = 3 und z = 4 und x = 3, y = 0 und z = 7.

12. Verfahren gemäß einem der Ansprüche 1 bis 8, **dadurch gekennzeichnet, dass** man das Polymer wie in einem der Ansprüche 9 bis 11 definiert den folgenden aufeinanderfolgenden Schritten unterzieht:
- Bilden eines Films;
- Orientieren der Chromophore; und
- Vernetzen.

13. Verfahren gemäß Anspruch 12, **dadurch gekennzeichnet, dass** der Schritt des Orientierens der Chromophore und das Vernetzen die folgenden Phasen umfasst:
1. Erwärmen des Films auf eine Temperatur T1;
2. Anlegen einer Spannung V zwischen dem Film und einem Leitungsdraht, der in einer Entfernung d über dem Film angebracht ist, wobei die Temperatur während eines Zeitraums D1 auf dem Wert T1 gehalten wird;
3. Erwärmen und Halten des Films bei einer Temperatur T2 während eines Zeitraums D2, wobei die elektrische Spannung beibehalten wird;
4. Abkühlen auf Raumtemperatur, wobei die elektrische Spannung beibehalten wird; wobei T1 bei einer Temperatur von etwa 25°C oberhalb oder unterhalb der Tg, vorzugsweise etwa 20°C oberhalb oder unterhalb der Tg und noch stärker bevorzug etwa 10°C oberhalb oder unterhalb der Tg liegt;
wobei V zwischen 10V und 8kV, vorzugsweise zwischen 2kV und 4kV und noch stärker bevorzugt bei etwa 3,5kV liegt;
wobei d zwischen 1 und 15 mm, vorzugsweise zwischen 2 und 10 mm und noch stärker bevorzugt bei etwa 5 mm liegt;
wobei T2 zwischen 120 und 200°C, vorzugsweise zwischen 130 und 170°C und noch stärker bevorzugt bei etwa 150°C liegt;
wobei die Zeitdauern D1 und D2 unabhängig voneinander zwischen 30 min und 2 h, vorzugsweise zwischen 45 min und 1 h 30 und noch stärker bevorzugt bei etwa 1 h liegen.

14. Verfahren gemäß Anspruch 11 oder 12, **dadurch gekennzeichnet, dass** der Schritt des Formens des Films durch Schleuderbeschichten mit einer Lösung des Polymers in einem Lösungsmittel durchgeführt wird, das aus der Gruppe ausgewählt ist umfassend ein halogeniertes Lösungsmittel, vorzugsweise ein chloriertes Lösungsmittel und noch stärker bevorzugt Trichlorethan oder Orthodichlorbenzol; N-Methylpyrrolidon; THF und Gemischen davon.

15. Verfahren gemäß Anspruch 14, **dadurch gekennzeichnet, dass** auf das Schleuderbeschichten Tempern folgt, wobei das Tempern bei einer Temperatur zwischen 40 und 80°C, vorzugsweise zwischen 50 und 70°C und noch stärker bevorzugt bei etwa 60°C durchgeführt wird, während einer Dauer von 30 min bis 2 h, vorzugsweise von 45 min bis 1 h 30 und noch stärker bevorzugt von etwa 1 h.

16. Polymermaterial, vernetzt gemäß dem Verfahren nach einem der Ansprüche 1 bis 8 und 11 bis 15, das eine Orientierungsstabilität der Chromophore aufweist, so dass die Verringerung der nicht linearen optischen Eigenschaft nach Halten des Materials auf einer Temperatur von 85°C während 1000 Stunden unter 5% liegt.

17. Polymermaterial, vernetzt gemäß dem Verfahren nach einem der Ansprüche 1 bis 8 und 11 bis 15, das eine um mindestens 10°C höhere, vorzugsweise um mindestens 20°C höhere und noch stärker bevorzugt um mindestens 25°C höhere Tg als die des Ausgangspolymers aufweist.

18. Polymermaterial, vernetzt gemäß dem Verfahren nach einem der Ansprüche 1 bis 8 und 11 bis 15, das in THF und in den halogenierten Lösungsmitteln, insbesondere in chlorierten Lösungsmitteln wie Orthodichlorbenzol, unlöslich ist.

19. Polymermaterial, vernetzt gemäß dem Verfahren nach einem der Ansprüche 1 bis 8 und 11 bis 15, das in Form eines Films mit einer Dicke (e) von 0,1 bis 5 µm, vorzugsweise von 0,5 bis 3 µm und stärker bevorzugt von 1 bis 2 µm vorliegt.

20. Polymermaterial, vernetzt gemäß dem Verfahren nach einem der Ansprüche 1 bis 8 und 11 bis 15, **dadurch gekennzeichnet, dass** sein elektrooptischer Koeffizient r₃₃ unabhängig von seiner Dicke (e) ist.

21. Verwendung eines Polymermaterial vernetzt gemäß dem Verfahren nach einem der Ansprüche 1 bis 8 und 11 bis 15 für optische Telekommunikationsanwendungen und optische Signalverarbeitung.

## Claims

1. A crosslinking process for polymers containing chromophoric groups, by thermal Huisgen reaction, in the absence of catalyst.

2. The crosslinking process as claimed in claim 1, **characterized in that** at least one azide function and at least one alkyne function are present on at least one from among the polymer or precursors thereof.

3. The process as claimed in claim 1 or 2, **characterized in that** the azide function and/or the alkyne function are present on the chromophoric groups.

4. The process as claimed in any one of claims 1 to 3, **characterized in that** the polymer has a main chain of monomers chosen from the group comprising acrylic, methacrylic and vinyl monomers, and mixtures thereof.

5. The process as claimed in any one of claims 1 to 4, **characterized in that** the chromophoric group is a chromophoric group with nonzero quadratic hyperpolarizability, preferably of "push-pull" type and more particularly having the general structure D-π-A in which D is an electron donor, A is an electron acceptor and n is a n bridge.

6. The process as claimed in any one of claims 1 to 5, **characterized in that** the crosslinking is performed according to a reaction scheme chosen from the group comprising: 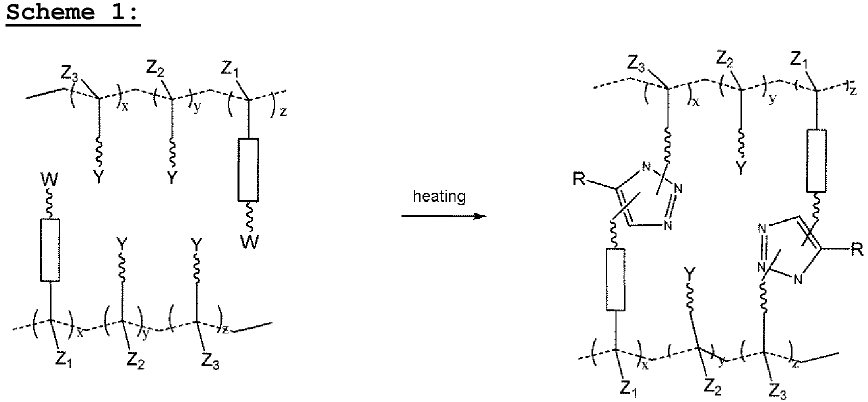 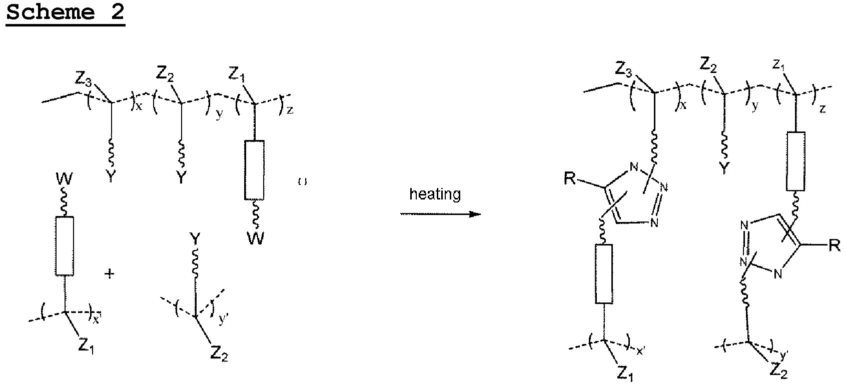 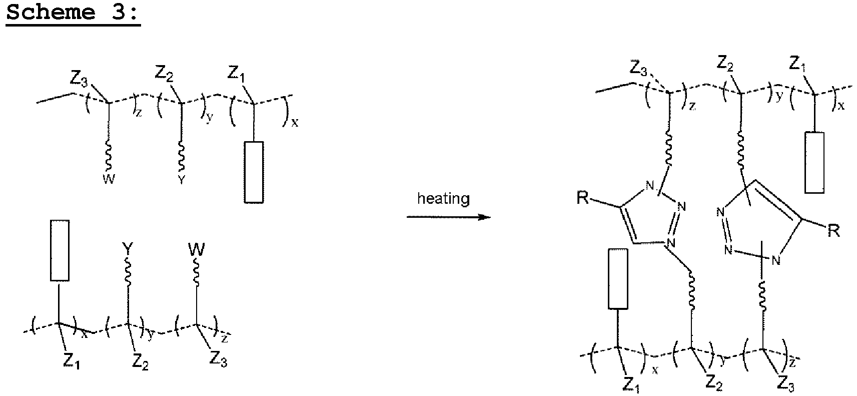 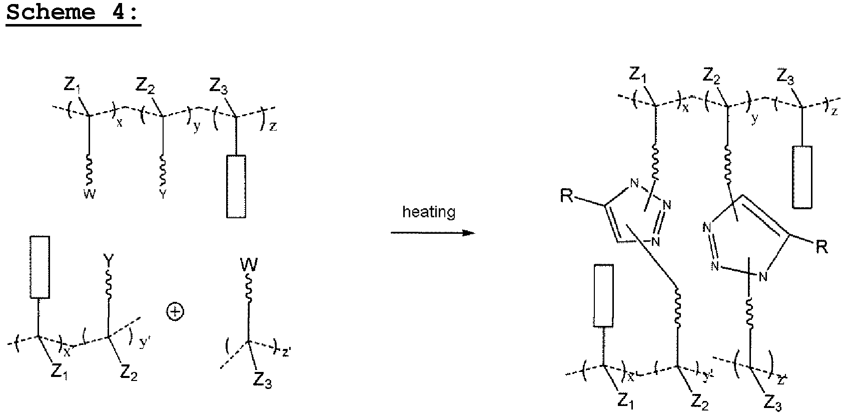 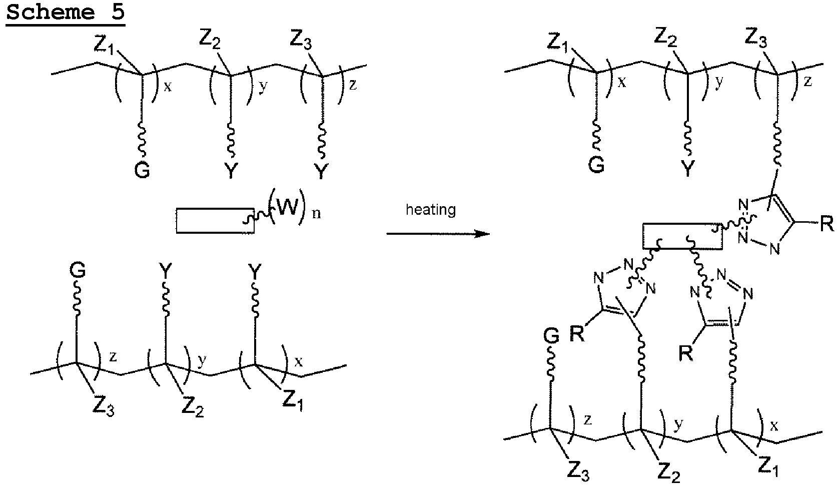 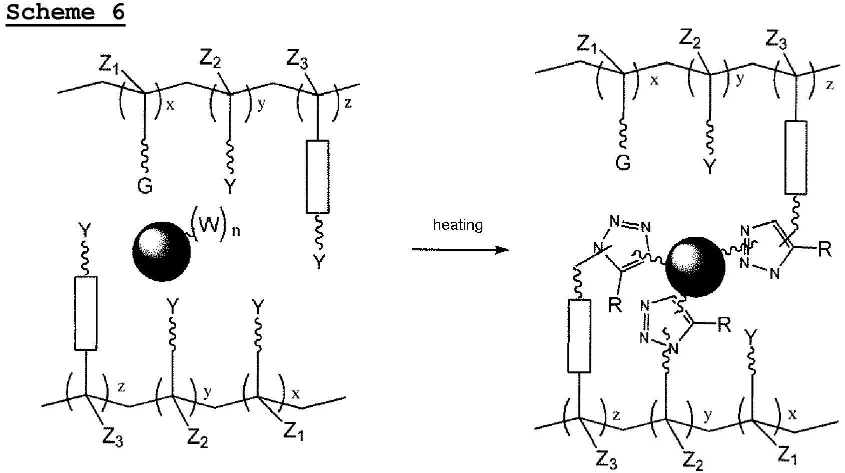 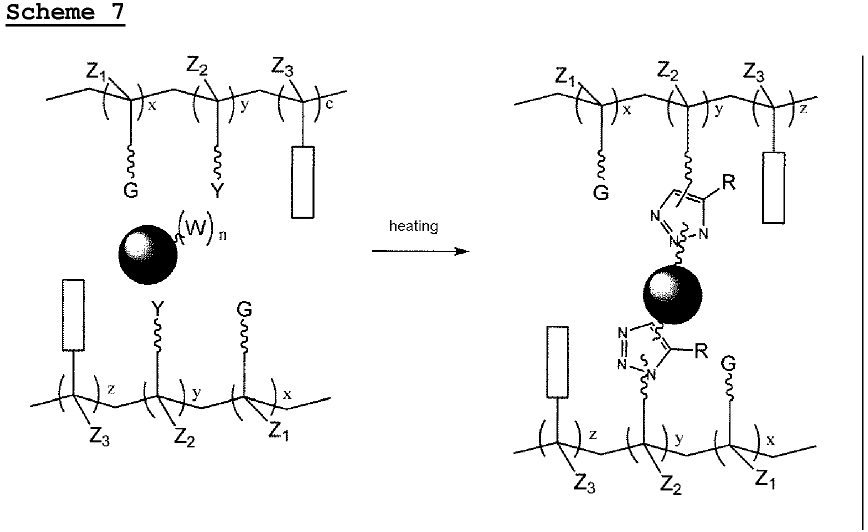 in which:
- 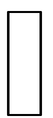 represents a chromophore with nonzero quadratic hyperpolarizability;
- Z₁, Z₂ and Z₃ represent, independently of each other, H, C₁-C₄ alkyl or phenyl;
- G is a group that is neutral towards crosslinking;
- 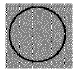 is any chemical species;
- n is an integer greater than 1;
- 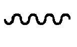 represents a connector;
- 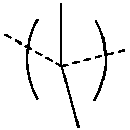 represents the repeating unit of the polymer;
- x, y, z, x', y' and z' represent, independently of each other, an integer between 0 and 100, preferably between 2 and 50 and even more preferentially between 3 and 10, it being understood that in each of the reaction schemes, two from among x, y, z and two from among x' , y' and z' are nonzero,
- W and Y are such that when Y represents N₃, then W represents 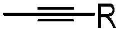 and when W represents N₃, then Y represents 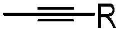 , R being chosen from the group comprising H, a linear, branched or cyclic, saturated or unsaturated hydrocarbon-based chain, optionally containing aromatic units optionally comprising heteroatoms such as O, S and N, and optionally substituted with electron-donating groups such as -OCH₃, -N(alkyl)₂ or with electron-accepting groups such as -CN, -CO₂alkyl, -NO₂, R may also represent a protecting group with an ethylynic function, preferably an alkylsilyl, an arylsilyl or an alkylarylsilyl, and even more preferentially trimethylsilyl, triisopropylsilyl, dimethyl-tert-butylsilyl, diphenyl-tert-butylsilyl or terphenylsilyl.

7. The process as claimed in any one of claims 1 to 6, **characterized in that** the crosslinking by Huisgen reaction is performed at a temperature in the order of the glass transition temperature of the polymer.

8. The process as claimed in any one of claims 1 to 6, **characterized in that** the temperature of crosslinking by Huisgen reaction is ranged from 120° to 200°C, preferably from 130° to 170°C and even more preferentially is about 150°C.

9. A chromophoric polymer that may be heat-crosslinked via the process as claimed in any one of claims 1 to 8, having the general formula (I) to (IV): 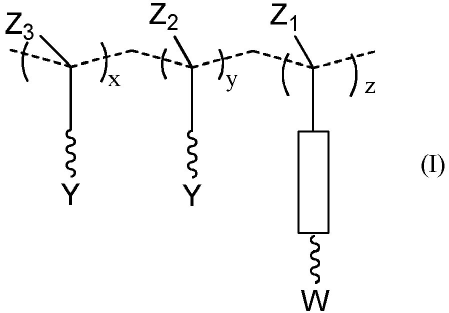 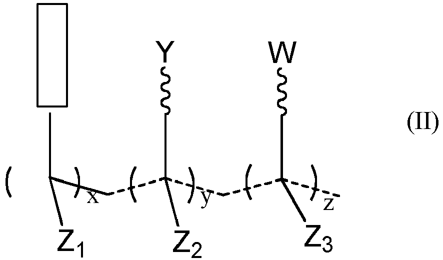 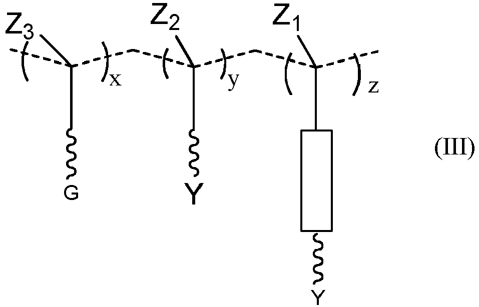 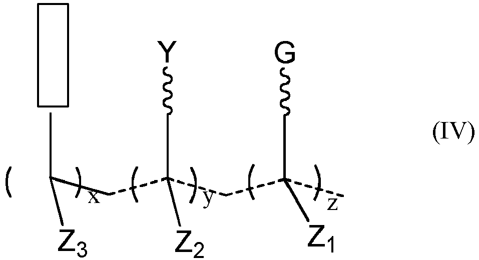
the various components being as defined in claim 6.

10. The chromophoric polymer that may be crosslinked as claimed in claim 9, which is chosen from the group comprising:

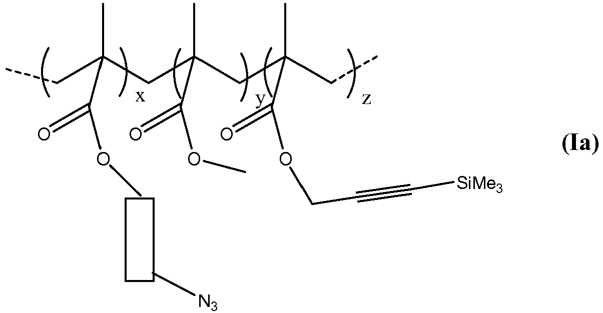

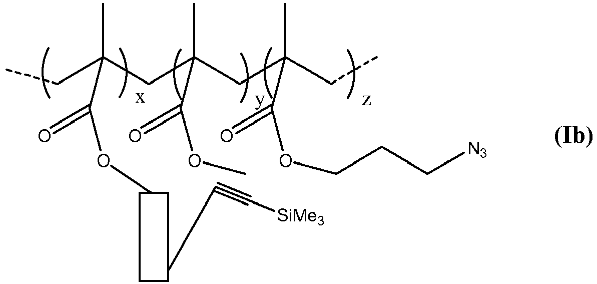

11. The polymer as claimed in claim 9 or 10, in which the monomer is of methacrylic type and the chromophore is a Disperse Red One (DR1) derivative, and chosen from the group comprising the polymers of formulae (I'a) and (I'b) 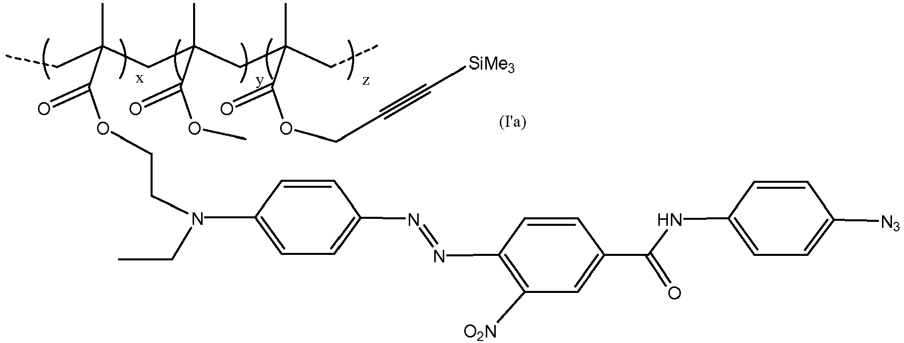 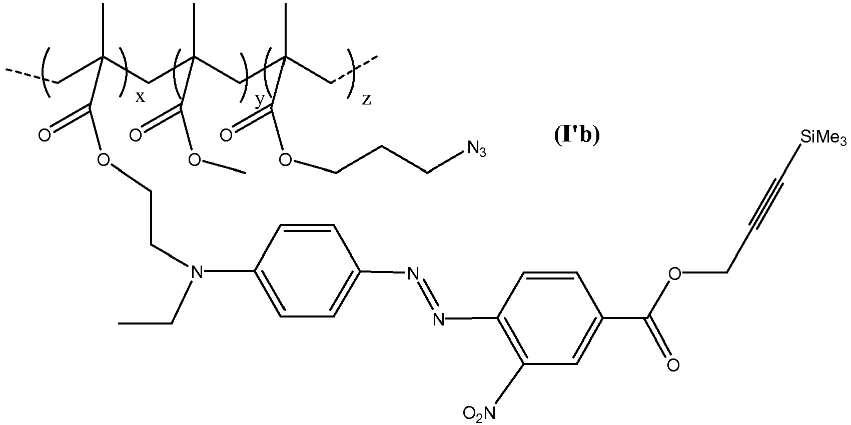 with x, y and z representing, independently of each other, an integer between 0 and 7, it being understood that only one from among x, y and z may represent 0; preferably, the combinations of x, y and z being chosen from the group comprising:
x=3, y=3 and z=4 and x=3, y=0 and z=7.

12. The process as claimed in any one of claims 1 to 8, **characterized in that** the polymer as defined in any one of claims 9 to 11 is subjected to the following successive steps:
- formation of a film;
- orientation of the chromophores; and
- crosslinking.

13. The process as claimed in claim 12, **characterized in that** the step of orienting the chromophores and of crosslinking includes the following stages:
1. heating the film to a temperature T1;
2. applying a voltage V between the film and a conductive wire placed at a distance d above the film, while keeping the temperature at the value T1 for a time D1;
3. heating and maintaining the film at a temperature T2 for a time D2 while maintaining the electrical voltage;
4. cooling to room temperature, while maintaining the electrical voltage;
T1 being at a temperature that is about 25°C higher or lower than the Tg, preferably about 20°C higher or lower than the Tg and even more preferentially about 10°C higher or lower than the Tg.
V being between 10 V and 8 kV, preferably between 2 kV and 4 kV and even more preferentially about 3.5 kV;
d being between 1 and 15 mm, preferably between 2 and 10 mm and even more preferentially about 5 mm;
T2 is between 120 and 200°C, preferably between 130 and 170°C and even more preferentially about 150°C;
the times D1 and D2 being, independently of each other, between 30 minutes and 2 hours, preferably between 45 minutes and 1 hour 30 minutes and even more preferentially about 1 hour.

14. The process as claimed in claim 11 or 12, **characterized in that** the step of forming the film is performed by centrifugal induction with a solution of the polymer in a solvent chosen from the group comprising a halogenated solvent, preferably a chlorinated solvent and even more preferentially trichloroethane or orthodichlorobenzene; N-methylpyrrolidone; THF; and mixtures thereof.

15. The process as claimed in claim 14, **characterized in that** the centrifugal induction is followed by annealing, the annealing being performed at a temperature ranged from 40 and 80°C, preferably from 50 to 70°C and even more preferentially about 60°C, for a time of 30 minutes to 2 hours, preferably from 45 minutes to 1 hour 30 minutes and even more preferentially about 1 hour.

16. A polymerized crosslinked material as claimed in the process of any one of claims 1 to 8 and 11 to 15, having orientation stability of the chromophores such that the reduction in the nonlinear optical property is less than 5% after maintaining said material for 1000 hours at a temperature of 85°C.

17. The polymerized crosslinked material as claimed in the process of any one of claims 1 to 8 and 11 to 15, with a Tg at least 10°C, preferably at least 20°C and even more preferentially at least 25°C higher than that of the polymer from which it was obtained.

18. The polymerized crosslinked material as claimed in the process of any one of claims 1 to 8 and 11 to 15, which is insoluble in THF and in halogenated solvents, especially chlorinated solvents such as orthodichlorobenzene.

19. The polymerized material crosslinked as claimed in the process of any one of claims 1 to 8 and 11 to 15, which is in the form of a film with a thickness (e) ranged from 0.1 to 5 µm, preferably from 0.5 to 3 µm and more preferentially from 1 to 2 µm.

20. The polymerized material crosslinked as claimed in the process of any one of claims 1 to 8 and 11 to 15, **characterized in that** its electrooptic coefficient r₃₃ is independent of its thickness (e).

21. The use of a polymerized material crosslinked as claimed in the process of any one of claims 1 to 8 and 11 to 15, for applications in optical telecommunications and optical signal processing.
